# FASCICULE DE BREVET EUROPEEN

(11) **EP 3 502 997 B1**
(45) Date de publication et mention de la délivrance du brevet: **01.09.2021**
(21) Numéro de dépôt: 18215118.3
(22) Date de dépôt: 21.12.2018
(51) Int. Cl.: G06Q 20/34, G06Q 20/38

(54) **SAUVEGARDE DE DONNEES D'HISTORIQUE DANS UN DISPOSITIF DESTINE A TRAITER DES TRANSACTIONS**
SPEICHERUNG VON HISTORISCHEN DATEN IN EINER VORRICHTUNG, DIE ZUR VERARBEITUNG VON TRANSAKTIONEN BESTIMMT IST
BACKUP OF HISTORY DATA IN A DEVICE INTENDED FOR PROCESSING TRANSACTIONS

(30) Priorité: 22.12.2017 FR 1763191
(43) Date de publication de la demande: 26.06.2019
(73) Titulaire: IDEMIA France, 92400 Courbevoie (FR)
(72) Inventeur: VAURES, Pierre, 92400 COURBEVOIE (FR); VILAIN, Antoine, 92400 COURBEVOIE (FR); MOUROUX, Benoit, 92400 COURBEVOIE (FR); CHAMBEROT, Francis, 92400 COURBEVOIE (FR)
(74) Mandataire: Cabinet Beau de Loménie

(56) Documents cités:
- WO-A1-2017/203146
- FR-A1- 2 918 483

## Description

### Arrière-plan de l'invention

La présente invention se situe dans le domaine général des dispositifs électroniques et concerne plus particulièrement un dispositif électronique, tel qu'une carte à puce par exemple, configurée pour coopérer avec un terminal externe pour réaliser une transaction, dans le domaine bancaire par exemple.

L'invention s'applique plus particulièrement, mais de manière non exclusive, aux cartes à puce (ou cartes à microcircuit), conformes par exemple à la norme ISO7816. L'invention vise notamment la sécurisation d'une carte à puce fonctionnant selon le protocole EMV (pour « *Europay Mastercard Visa*»).

De manière générale, une carte à puce est conçue pour communiquer avec un dispositif externe à cette carte, autrement appelé terminal ou lecteur. Ces cartes permettent d'effectuer divers types de transactions, telles que par exemple des transactions de paiement, de prélèvement ou encore d'authentification du porteur. Les cartes à puce pour applications bancaires (carte de crédit, carte de débit etc.), par exemple, sont aptes à coopérer avec des terminaux de paiement ou des distributeurs automatiques de billets (DAB) pour réaliser divers opérations financières.

EMV est le protocole standardisé utilisé aujourd'hui majoritairement dans le monde pour sécuriser notamment les transactions de paiement effectuées par des cartes à puce.

Le protocole EMV a été conçu pour diminuer les risques de fraudes lors d'une transaction de paiement en permettant notamment l'authentification à la fois de la carte à puce et de son porteur. Ce processus d'authentification fait appel à une combinaison de cryptogrammes (ou clés cryptées) et de signatures numériques et nécessite éventuellement la saisie d'un code secret (appelé communément code PIN) par le porteur de la carte.

Au cours d'une transaction, une carte bancaire obtient un certain nombre de données représentatives de cette transaction, comme par exemple la date de la transaction, la monnaie utilisée, le montant de la transaction ou encore les contrôles sécuritaires effectués par la carte ainsi que les résultats obtenus. De façon connue, des données, dites données d'historisation, représentatives d'une transaction peuvent être enregistrées dans une mémoire de la carte bancaire afin de conserver un historique des transactions réalisées. Les types de données d'historisation qu'une carte bancaire garde en mémoire à chaque transaction sont définis par certaines normes (VISA ou MASTERCARD par exemple).

Le document WO2017/203146 A1 (Oberthur Tech. [FR]) décrit un mécanisme de sécurité permettant de protéger une carte à puce EMV contre des comportements anormaux survenant notamment lors de transactions hors ligne. Pour ce faire, il est prévu que la carte à puce sélectionne dans un fichier d'historisation des anciennes transactions réalisées dans une fenêtre temporelle, puis analyse un risque d'utilisation anormale à partir des données d'historisation enregistrées dans le fichier d'historisation pour les transactions sélectionnées. Cependant, un problème se pose en ce que les ressources en mémoire des dispositifs électroniques tels que les cartes à puce sont limitées. Aussi, lorsque la mémoire de l'historique est pleine, la carte bancaire écrase généralement les données d'historisation de la transaction la plus ancienne avec les nouvelles données d'historisation de la transaction courante. Il s'agit d'un système d'enregistrement cyclique. Ce système permet d'utiliser la mémoire en conservant le plus longtemps possible les données d'historisation d'une transaction donnée.

Or, l'enregistrement cyclique présente l'inconvénient en ce que les données qui sont écrasées sont parfois toujours pertinentes : elles peuvent être utiles pour la carte bancaire ou l'émetteur de la carte par exemple. Si des données d'historisation sont supprimées dans la mémoire avant que la carte ait pu les transmettre, lors d'une transaction par exemple, l'émetteur de la carte ne pourra pas les récupérer. Les données d'historisation sont cependant très utiles notamment pour le suivi des transactions, la détection de fraudes, le suivi comportemental des utilisateurs etc. Dans certains cas, ces données d'historisation sont nécessaires à la carte bancaire pour réaliser des contrôles sécuritaires internes, lors du traitement d'une transaction par exemple.

Il existe donc aujourd'hui un besoin pour une solution permettant une meilleure gestion de l'enregistrement de l'historique de transactions dans une carte à puce (carte bancaire, carte de paiement...), et plus généralement dans un dispositif électronique destiné à coopérer avec un terminal externe pour réaliser une quelconque transaction.

### Objet et résumé de l'invention

A cet effet, la présente invention concerne un procédé de traitement mis en œuvre par un dispositif électronique apte à traiter des transactions selon la revendication 1.

La présente invention permet d'optimiser l'usage de la mémoire du dispositif électronique pour stocker des données d'historique propres à des transactions traitées par ledit dispositif. Comme déjà indiqué, les ressources en mémoire d'une carte à puce sont limitées. Le dispositif électronique selon l'invention est capable de transférer si besoin certaines données d'historique jugées pertinentes, depuis un premier fichier d'historisation vers un deuxième fichier d'historisation, de sorte à réaliser une sauvegarde sous forme compressée de données d'historisation.

Selon un mode de réalisation particulier, le deuxième format de données est réduit en ce qu'il autorise l'enregistrement d'une quantité inférieure de données par rapport au premier format de données.

Selon un mode de réalisation particulier, le premier format de données définit une pluralité de types de données à enregistrer tandis que le deuxième format de données définit une sélection parmi ladite pluralité de types de données excluant au moins l'un parmi ladite pluralité de types de données.

Selon un mode de réalisation particulier, ladite vérification comprend :
- détermination que l'enregistrement des nouvelles données d'historisation selon le premier format de données dans le premier fichier d'historisation conduit à un écrasement d'une précédente entrée, représentative d'une précédente transaction, déjà enregistrée dans le premier fichier d'historisation selon le premier format de données ; et
- détection que l'enregistrement est critique si la précédente transaction, définie par la précédente entrée dans le premier fichier d'historisation, remplit une première condition temporelle.

Selon un mode de réalisation particulier, la première condition temporelle est remplie si un instant antérieur au cours duquel a été réalisée la précédente transaction selon ladite précédente entrée se trouve dans une période de temps, d'une durée prédéfinie, terminant à un instant courant au cours duquel est réalisé ou a été réalisé la transaction courante.

Selon un mode de réalisation particulier, ladite vérification comprend :
- détermination, à partir des données de transaction reçues, de l'instant courant caractérisant la transaction courante ; et
- calcul d'un deuxième instant antérieur correspondant au début de la période de temps, à partir de l'instant courant et de la durée prédéfinie attribuée à ladite période de temps,

le premier instant antérieur se trouvant dans la période de temps s'il est postérieur au deuxième instant antérieur.

Selon un mode de réalisation particulier, le procédé de traitement comprend, préalablement audit enregistrement des nouvelles données d'historisation selon le premier format de données dans le deuxième fichier d'historisation :
- sélection, parmi des types de données d'historisation définis par le premier format de données, d'un sous-ensemble de types de données d'historisation conformément à au moins une règle de sélection prédéfinie ; et
- conversion des anciennes données d'historisation selon le deuxième format de données en vue d'être transférées dans le deuxième fichier d'historisation, dans laquelle seulement le ou les types de données d'historisation sélectionnés sont conservés dans les anciennes données d'historisation lors de ladite conversion.

Selon un mode de réalisation particulier, préalablement à ladite sélection, le second fichier d'historisation comprend déjà au moins une entrée sauvegardée selon le deuxième format de données, ladite entrée sauvegardée étant représentative d'une précédente transaction antérieure à la transaction courante. Lors de ladite sélection, le dispositif électronique sélectionne un premier type de données d'historisation prédéfini seulement si la plus récente entrée sauvegardée dans le second fichier d'historisation comportant le premier type de donnée d'historisation spécifie, pour ledit premier type de données d'historisation, une valeur différente de celle définie par ladite précédente entrée

Selon un mode de réalisation particulier, lors de ladite vérification, le dispositif électronique détecte systématiquement que l'enregistrement n'est pas critique si la transaction courante est une transaction sans contact.

Selon un mode de réalisation particulier, si la transaction courante est une transaction par contact avec le terminal, le dispositif électronique détecte systématiquement lors ladite vérification que l'enregistrement est critique si la condition suivante est remplie :
détection que ledit enregistrement des nouvelles données d'historisation selon le premier format de données dans le premier fichier d'historisation conduit le premier fichier d'historisation à contenir un nombre, supérieur ou égal à une valeur seuil prédéterminée, d'entrées de transactions satisfaisant une deuxième condition temporelle.

Selon un exemple particulier, la deuxième condition temporelle est identique à la première condition temporelle définie ci-avant.

Selon un mode de réalisation particulier, s'il est détecté lors de ladite vérification que ledit enregistrement n'est pas critique, le dispositif électronique ne transfert pas les anciennes données d'historisation dans le deuxième fichier d'historisation selon le deuxième format de données préalablement audit enregistrement.

Selon un mode de réalisation particulier, le dispositif électronique détecte lors de ladite vérification que ledit enregistrement est critique uniquement sur détection que la transaction courante est passée avec succès.

Selon un mode de réalisation particulier, le procédé de traitement comprend, après ledit transfert des anciennes données d'historisation selon le deuxième format de données dans le deuxième fichier d'historisation :
- conversion des anciennes données d'historisation depuis le deuxième format de données dans un format modifié à partir du contenu d'une précédente entrée dans le deuxième fichier d'historisation ; et
- transmission des anciennes données d'historisation dans le format modifié de données à un terminal.

Dans un mode particulier de réalisation, les différentes étapes du procédé traitement sont déterminées par des instructions de programmes d'ordinateurs.

En conséquence, l'invention vise aussi un programme d'ordinateur sur un support d'informations (ou support d'enregistrement), ce programme étant susceptible d'être mis en œuvre dans un dispositif électronique ou dans un ordinateur, ce programme comportant des instructions adaptées à la mise en œuvre des étapes d'un procédé de traitement tel que défini dans ce document.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

L'invention concerne également un dispositif électronique configuré pour mettre en œuvre le procédé de traitement de l'invention tel que défini ci-avant.

Plus particulièrement, l'invention vise un dispositif électronique apte à traiter des transactions selon la revendication 15.

Selon un exemple particulier, le dispositif électronique est une carte à puce, par exemple de type EMV (carte de paiement ou autre).

On notera que les différents modes de réalisation mentionnés ci-avant en relation avec le procédé de traitement de l'invention ainsi que les avantages associés s'appliquent de façon analogue au dispositif électronique de l'invention.

Selon un mode de réalisation, l'invention est mise en œuvre au moyen de composants logiciels et/ou matériels. Dans cette optique, le terme « module » peut correspondre dans ce document aussi bien à un composant logiciel, qu'à un composant matériel ou à un ensemble de composants matériels et logiciels.

Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonctions, selon ce qui est décrit ci-dessous pour le module concerné. Un tel composant logiciel peut être exécuté par un processeur de données d'une entité physique (terminal, carte à puce etc.) et est susceptible d'accéder aux ressources matérielles de cette entité physique (mémoires, supports d'enregistrement, bus de communication, cartes électroniques d'entrées/sorties, interfaces utilisateur, etc.).

De la même manière, un composant matériel correspond à tout élément d'un ensemble matériel (ou hardware) apte à mettre en œuvre une fonction ou un ensemble de fonctions, selon ce qui est décrit ci-dessous pour le module concerné. Il peut s'agir d'un composant matériel programmable ou avec processeur intégré pour l'exécution de logiciel, par exemple un circuit intégré.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:
- la figure 1 représente schématiquement un environnement comprenant un dispositif électronique apte à coopérer avec un terminal, selon un mode de réalisation particulier de l'invention ;
- les figures 2A et 2B représentent schématiquement des données d'historisation conformes respectivement à un premier format de données et à un deuxième format de données, selon un mode de réalisation particulier de l'invention ;
- la figure 3 représente schématiquement des modules fonctionnels mis en œuvre par un dispositif électronique, selon un mode de réalisation particulier de l'invention
- les figures 4A et 4B représentent schématiquement des données d'historisation enregistrées respectivement dans un premier fichier d'historisation et dans un deuxième fichier d'historisation, selon un mode de réalisation particulier de l'invention ;
- la figure 5 représente, sous forme d'un diagramme, les étapes d'un procédé de traitement, selon un mode de réalisation particulier de l'invention ;
- la figure 6 représente, sous forme d'un diagramme, les étapes d'un procédé de traitement, selon un mode de réalisation particulier de l'invention ;
- les figures 7A et 7B représentent schématiquement le traitement dans le temps de transactions par un dispositif électronique, selon un mode de réalisation particulier de l'invention ;
- la figure 8 représente, sous forme d'un diagramme, les étapes d'un procédé de traitement, selon un mode de réalisation particulier de l'invention ; et
- la figure 9 représente, sous forme d'un diagramme, les étapes d'un procédé de traitement, selon un mode de réalisation particulier de l'invention.

### Description détaillée de plusieurs modes de réalisation

Comme indiqué précédemment, la présente invention concerne les dispositifs électroniques, tels que les cartes à puce par exemple, configurés pour coopérer avec un terminal externe pour réaliser une transaction, dans le domaine bancaire par exemple.

L'invention propose un procédé de traitement permettant la gestion du stockage d'un historique de transactions dans une carte à puce (de type EMV par exemple), et plus généralement dans un dispositif électronique, afin d'optimiser l'utilisation des ressources en mémoire du dispositif électronique et de sorte à limiter les risques que des données d'historique pertinentes soient perdues. A cette fin, l'invention prévoit l'enregistrement par un dispositif électronique de nouvelles données d'historisation (ou données d'historique), représentatives d'une transaction courante, selon un premier format de données dans un premier fichier d'historisation. En outre, si cet enregistrement risque de causer la perte d'anciennes données d'historisation déjà présentes dans ce premier fichier d'historisation, l'invention prévoit le transfert de ces anciennes données d'historisation dans un second fichier d'historisation selon un deuxième format de données, réduit en taille par rapport au premier format, afin de sauvegarder une version compressée de ces anciennes données dans la mémoire du dispositif électronique.

Divers conditions prédéfinies peuvent s'appliquer pour déterminer si un tel mécanisme de sauvegarde doit être déclenché par le dispositif électronique.

En particulier, selon différents mode de réalisation, le procédé de traitement de l'invention, mis en œuvre par un dispositif électronique tel qu'une carte à puce par exemple, comprend : réception de données de transaction en provenance d'un terminal ; obtention, à partir des données de transaction reçues, de nouvelles données d'historisation représentatives d'une transaction courante ; et enregistrement des nouvelles données d'historisation selon un premier format de données dans un premier fichier d'historisation. En outre, préalablement audit enregistrement, le procédé comprend : vérification que ledit enregistrement remplit au moins une condition prédéterminée indiquant que ledit enregistrement est critique vis-à-vis d'anciennes données d'historisation déjà stockées dans le premier fichier d'historisation ; et, dans l'affirmative, transfert (ou sauvegarde) des anciennes données d'historisation dans un deuxième fichier d'historisation selon un deuxième format de données, compressé ou réduit en taille par rapport au premier format de données.

L'invention porte également sur un dispositif électronique configuré pour mettre en œuvre un procédé de traitement comme défini ci-dessus.

Dans le présent exposé, des exemples de mises en œuvre de l'invention sont décrits en relation avec une carte à puce de type EMV. On comprendra que l'invention ne se limite pas exclusivement aux cartes à puce EMV mais s'applique plus généralement à tous dispositifs électroniques configurés pour mettre en œuvre une transaction, y compris des dispositifs autre que des cartes à puce et qui utilisent le standard EMV, et des dispositifs électroniques qui utilisent d'autres standards de transaction.

On peut également noter que la notion de transaction est ici entendue au sens large et comprend par exemple, dans le domaine bancaire, aussi bien une transaction de paiement ou de transfert qu'une transaction de consultation d'un compte bancaire sur un terminal bancaire. Les divers modes de réalisation de l'invention sont ici décrits dans le cadre d'une carte de paiement destinée à réaliser des transactions bancaires. On comprend que d'autres types de transactions ou opérations sont envisageables dans le cadre de l'invention. L'invention peut s'appliquer par exemple au stockage de données d'historisation représentatives de transactions d'authentification.

Sauf indications contraires, les éléments communs ou analogues à plusieurs figures portent les mêmes signes de référence et présentent des caractéristiques identiques ou analogues, de sorte que ces éléments communs ou analogues ne sont généralement pas à nouveau décrits par souci de simplicité.

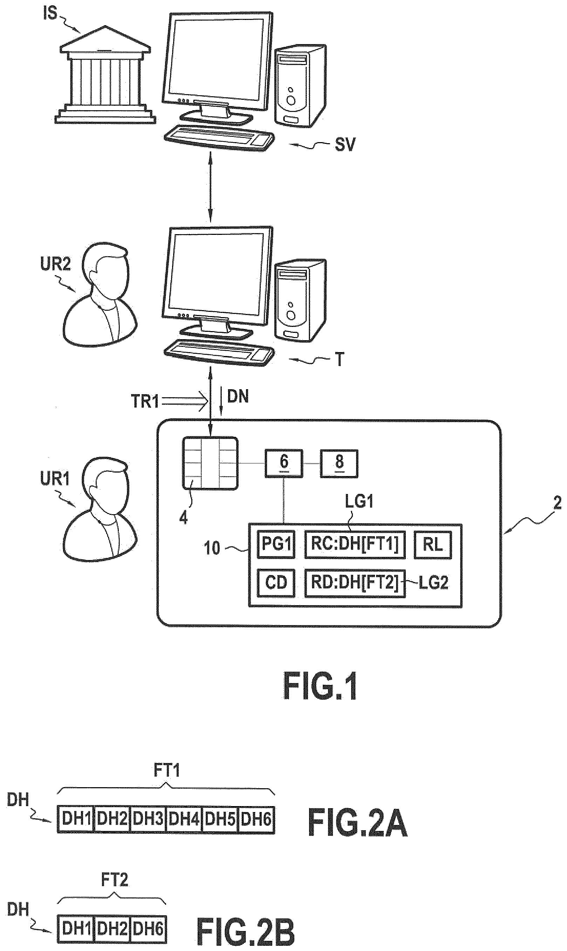

La **figure 1** représente schématiquement un environnement comportant un dispositif électronique 2 d'un utilisateur UR1 et un terminal (ou lecteur) T d'un utilisateur UR2. Le dispositif électronique 2 est configurée pour coopérer avec le terminal T pour traiter une transaction TR1, dite transaction courante.

Comme déjà indiqué, on suppose ici que le dispositif électronique 2 est une carte à puce EMV, telle qu'une carte de paiement par exemple. La carte bancaire 2 est par exemple conforme à la norme ISO 7816. Dans un exemple particulier, le porteur UR1 utilise sa carte bancaire pour réaliser un paiement à l'aide du terminal T d'un point de vente (ou marchand) noté UR2.

Le terminal T permet le cas échéant de faire l'interface entre la carte bancaire 2 et un serveur distant SV d'une entité tierce IS (par exemple un organisme bancaire émetteur de la carte à puce 2). Ce serveur distant SV intervient éventuellement pour réaliser des contrôles sécuritaires supplémentaires lors d'un traitement en ligne de la transaction courante TR1.

Il convient de noter que certains éléments généralement présents dans une carte à puce EMV ont été volontairement omis car ils ne sont pas nécessaires à la compréhension de la présente invention. A noter également que la carte à puce 2 représentée en **figure 1** ne constitue qu'un exemple de réalisation, d'autres mises en œuvre étant possibles dans le cadre de l'invention. L'homme du métier comprend en particulier que certains éléments de la carte à puce 2 ne sont décrits dans ce document que pour faciliter la compréhension de l'invention, ces éléments n'étant pas nécessaires pour mettre en œuvre l'invention.

Plus précisément, la carte à puce 2 comprend dans cet exemple des contacts externes 4 configurés pour coopérer avec le lecteur T, un processeur 6, une mémoire volatile réinscriptible (de type RAM) 8 et une mémoire non volatile réinscriptible 10 (de type Flash par exemple).

La mémoire non-volatile 10 constitue dans cet exemple un support d'enregistrement (ou support d'informations) conforme à un mode de réalisation particulier, lisible par la carte à puce 2, et sur lequel est enregistré un programme d'ordinateur PG1 conforme à un mode de réalisation particulier. Ce programme d'ordinateur PG1 comporte des instructions pour l'exécution des étapes d'un procédé de traitement selon un mode de réalisation particulier. Les étapes de ce procédé sont décrites ultérieurement, dans des modes de réalisation particuliers de l'invention.

Dans un exemple particulier, la carte à puce 20 est conforme à la norme ISO 7816. Dans ce cas, les contacts externes 4 présentent des caractéristiques conformes à cette norme. On comprend toutefois que d'autres modes de réalisation sont possibles sans l'utilisation de tels contacts externes. La carte à puce 2 peut par exemple être configurée pour coopérer avec le lecteur T en mode sans contact via une antenne RF (non représentée) intégrée dans la carte 2.

Toujours dans l'exemple considéré ici, la mémoire non volatile réinscriptible 10 est configurée pour stocker des données d'historisation (ou données d'historique) DH représentatives de transactions traitées par la carte à puce 2 au fil du temps. Pour ce faire, la mémoire 10 comprend deux fichiers d'historisation, à savoir un premier fichier d'historisation (ou fichier primaire d'historisation) LG1 configuré pour enregistrer des données d'historisation DH selon un premier format de données FT1 et un deuxième fichier d'historisation (ou fichier secondaire d'historisation) LG2 configuré pour enregistrer des données d'historisation DH selon un deuxième format de données FT2, distinct du premier format FT1. Comme expliqué par la suite, le deuxième format de données FT2 est réduit en taille (compressé) par rapport au premier format de données FT1. Ainsi, le deuxième format FT2 ne permet de stocker que certaines des données d'historisation définies par le premier format de données FT1.

Selon un exemple de réalisation, les premier et deuxième fichiers d'historisation LG1, LG2 sont (ou correspondent à) des zones mémoires distinctes.

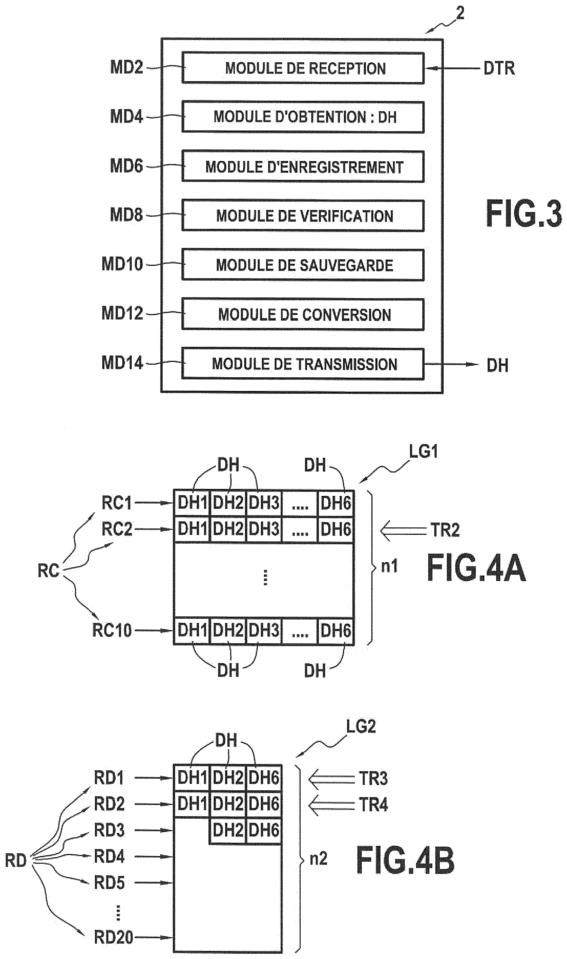

Ces fichiers d'historisation LG1 et LG2 (appelés aussi « *transaction Log file* » en anglais) sont décrits plus en détail ci-après en référence notamment aux **figures 4A-4B****.** Les données d'historisation DH sont enregistrées sous formes d'entrées successives dans les premier et deuxième fichiers d'historisation LG1 et LG2, chaque entrée étant représentative d'une transaction traitée par la carte à puce 2. Les données d'historisation DH sont stockées dans ces fichiers LG1 et LG2 selon respectivement des formats de données différents FT1 et FT2 de sorte à pouvoir être ultérieurement consultées par la carte à puce 2 ou transmises vers un terminal externe, tel que le terminal T par exemple.

Comme expliqué ci-après, le deuxième fichier d'historisation LG2 sert de fichier de sauvegarde pour des données d'historisation DH transférées, le cas échéant, depuis le premier fichier d'historisation LG1. Ce transfert de sauvegarde est déclenché par la carte à puce 2 lorsqu'elle détecte qu'un enregistrement imminent de nouvelles données d'historisation DH représentatives d'une transaction courante est critique, c'est-à-dire que cet enregistrement risque de causer la perte d'anciennes données d'historisation dans le premier fichier d'historisation LG1. Ce transfert constitue un mécanisme de sauvegarde au sens de l'invention.

Comme représenté en **figure 1****,** la mémoire non volatile 10 peut également stocker au moins une condition prédéfinie CD définissant si l'enregistrement de données d'historisation DH d'une transaction courante TR1 dans le premier fichier d'historisation LG1 selon le premier format FT1 est critique ou non.

La mémoire non volatile 10 peut aussi stocker au moins une règle prédéfinie RL définissant le ou les types de données d'historisation qui doivent être sauvegardés dans le deuxième fichier d'historisation LG2 conformément au deuxième format FT2 lorsque d'anciennes données d'historisation sont transférées depuis le premier fichier d'historisation LG1. Comme décrit par la suite, la carte à puce 2 détermine, à partir de la ou des règles prédéfinies RL, les données d'historisation DH qui doivent être transférées conformément au deuxième format FT2 dans le deuxième fichier d'historisation LG2 et celles qui doivent être exclues de ce transfert de sauvegarde.

La nature des conditions CD et des règles RL ainsi que leur utilisation sont décrites plus en détail ultérieurement.

Comme déjà indiqué, la carte à puce 2 est configurée pour mémoriser des données d'historisation DH selon un premier format FT1 de données dans le premier fichier d'historisation LG1 et pour sauvegarder si besoin des données d'historisation DH dans le deuxième fichier d'historisation LG2 selon un deuxième format FT2 de données, ce format FT2 étant compressé (ou réduit en taille) par rapport au format FT1. Des exemples de mise en œuvre de ces formats FT1 et FT2 sont décrits ci-après.

Les **figures 2A** et **2B** représentent schématiquement des données d'historisation DH conformes respectivement au premier format FT1 de données et au deuxième format FT2 de données.

Comme illustré, les données d'historisation DH selon le premier format FT1 **(****figure 2A****)** comportent différents types de données notés DH1 à DH6 caractérisant une même transaction traitée par la carte à puce 2. Chaque type de donnée correspond à une caractéristique de la transaction concernée et présente une valeur particulière. Ces types de données DH1 à DH6 peuvent comprendre par exemple au moins l'un parmi les types de données suivants :
- point dans le temps (i.e. date et/ou heure) au cours duquel la transaction a été traitée ;
- la monnaie de la transaction ;
- montant de la transaction ;
- au moins un cryptogramme prédéfini ;
- contrôles sécuritaires réalisés par la carte à puce ;
- les résultats des contrôles sécuritaires ; et
- le résultat (ou statut) de la transaction (acceptée, refusée...).

Selon un exemple particulier, les types de données prévus par le premier format FT1 de données sont définis par la norme applicable VISA ou MASTERCARD.

Selon un exemple particulier, le premier format FT1 de données (ou « *Log format »* en anglais) est conforme à la norme suivante pour produit CPA (pour « *Common Payment Application* ») : « *EMV Integrated Circuit Card, Spécifications for Payment Systems, Common Payment Application Specification* », Version 1.0 décembre 2005.

L'homme du métier peut toutefois adapter notamment le nombre et la nature des types de données inclus dans le format FT1 selon le cas d'espèce.

Conformément à l'invention, le deuxième format FT2 de données est réduit en taille par rapport au premier format FT1 de données. Autrement dit, le deuxième format FT2 est un format compressé par rapport au premier format FT1. Le deuxième format FT2 de données est réduit (ou compressé) en ce qu'il autorise l'enregistrement d'une quantité inférieure de données par rapport au premier format FT1 de données. Le type de compression utilisé pour passer du premier format FT1 au deuxième format FT2 peut être adapté par l'homme du métier selon chaque cas d'espèce.

Comme illustré en **figure 2B****,** dans les exemples décrits ici, les données d'historisation DH selon le deuxième format FT2 comportent seulement certains parmi les types de données notés DH1 à DH6 caractérisant une même transaction traitée par la carte à puce 2. Chaque type de donnée correspond à une caractéristique de la transaction concernée et présente une valeur particulière. Dans cet exemple, les données d'historisation DH selon le deuxième format FT2 comportent les types de données DH1, DH2 et DH6 mais ne contiennent pas les types de données DH3, DH4 et DH5 prévus par le premier format FT1.

Dans cet exemple, tous les types de données DH1, DH2 et DH6 inclus dans le second format FT2 sont également présents dans le premier format FT1, bien que des variantes soient possibles. De manière générale, le premier format FT1 de données définit par exemple une pluralité de types de données (DH1-DH6 par exemple) tandis que le deuxième format FT2 de données définit une sélection (DH1, DH2, DH6 par exemple) parmi ladite pluralité de types de données excluant au moins l'un parmi ladite pluralité de types de données. D'autres modes de réalisation sont toutefois possibles.

Le processeur 6 piloté par le programme d'ordinateur PG1, met ici en œuvre un certain nombre de modules représentés en **figure 3****,** à savoir : un module de réception MD2, un module d'obtention MD4, un module d'enregistrement MD6, un module de vérification MD8, un module de sauvegarde MD10, et éventuellement aussi un module de conversion MD12 et un module de traitement MD14.

Comme illustré en **figures 1-3****,** le module de réception MD2 est configuré dans cet exemple pour recevoir des données de transaction DTR en provenance du terminal T avec lequel la carte à puce 2 coopère pour traiter une transaction TR1 courante. Ces données de transaction DTR peuvent comprendre divers types de données (point courant dans le temps, montant de la transaction, monnaie...) représentatives de la transaction courante TR1.

Le module d'obtention MD4 est configuré pour obtenir, à partir des données de transaction DTR reçues, de nouvelles données d'historisation DH représentatives de la transaction courante TR1. Ces donnée d'historisation DH peuvent comprendre des données supplémentaires par rapport aux données DTR fournies par le terminal T, telles que le type des contrôles sécuritaires effectués par la carte à puce 20 pour vérifier la validité de la transaction courante TR1 ou encore les résultats de ces contrôles sécuritaires ou le résultat final de la transaction (acceptée ou rejetée). Dans un exemple particulier, les données de transaction DTR reçues par le module de réception MD2 et les données d'historisation DH obtenues par le module d'obtention MD4 sont identiques.

Le module d'enregistrement MD6 est configuré pour enregistrer les nouvelles données d'historisation DH selon le premier format FT1 de données dans le premier fichier d'historisation LG1.

Le module de vérification MD8 est configuré pour vérifier, préalablement à l'enregistrement par le module d'enregistrement MD6 des nouvelles données d'historisation DH selon le premier format FT1 de données dans le premier fichier d'historisation LG1, que ledit enregistrement remplit au moins une condition prédéterminée indiquant que ledit enregistrement est critique vis-à-vis d'anciennes données d'historisation DH stockées en tant que précédente entrée dans le premier fichier d'historisation LG1.

Le module de sauvegarde MD10 est configuré, si l'enregistrement est détecté comme étant critique par le module de vérification MD8, pour transférer (ou sauvegarder) les anciennes données d'historisation dans le deuxième fichier d'historisation LG2 selon le deuxième format FT2 de données, réduit en taille par rapport au premier format FT1 de données. Pour ce faire, le module de sauvegarde MD10 compresse ces anciennes données d'historisation selon au moins une règle de sélection RL prédéfinie.

Par ailleurs, le module de conversion MD12 est configuré pour interpréter si besoin des données d'historisation DH sauvegardées selon le deuxième format FT2 de données dans le deuxième fichier d'historisation LG2. Pour ce faire, le module de conversion MD12 peut convertir des données d'historisation DH sauvegardées selon le deuxième format FT2 dans le deuxième fichier d'historisation LG2 sous une forme modifiée plus facilement exploitable par une entité tierce tel que le terminal T ou le serveur distant SV. Cette conversion peut être réalisée à partir de ladite au moins une règle de sélection RL prédéfinie utilisée préalablement par le module de sauvegarde MD10.

Le module de transmission MD14 peut être configuré pour transmettre des données d'historisation DH à un terminal externe tel que le terminal T par exemple. En particulier, le module de transmission MD12 peut transmettre des données d'historisation DH conformes au format FT2 ou éventuellement de telles données préalablement converties sous une forme modifiée par le module de conversion MD12.

La configuration et le fonctionnement des modules MD2-MD14 de la carte à puce 2 apparaîtront plus précisément dans les exemples de réalisation décrits ci-après en référence notamment aux **figures 4A-4B****,** **5-6****,** **7A-7B** et **8-9**. On comprendra toutefois que les modules MD2-MD14 tels que représentés en **figure 3** ne représentent qu'un exemple de mise en œuvre non limitatif de l'invention.

La coopération entre une carte à puce et un lecteur externe approprié pour réaliser une transaction de type EMV est connue en soi et ne sera donc pas développée en détail dans le présent exposé par souci de simplicité.

On suppose dans les modes de réalisation décrits ci-dessous que le mode d'enregistrement des entrées dans le premier fichier d'historisation LG1 **(****figure 1****)** est cyclique. Autrement dit, si le premier fichier d'historisation LG1 est rempli (contient le nombre maximum d'entrées enregistrables dans LG1), alors chaque nouvelle entrée représentative d'une transaction courante est enregistrée dans le fichier LG1 à la place de l'entrée la plus ancienne dans le fichier LG1, c'est-à-dire par écrasement de l'entrée correspondant à la transaction la plus ancienne. Comme déjà indiqué, cet écrasement peut avoir un caractère critique si les données d'historisation ainsi supprimées sont considérées comme étant toujours pertinentes.

La **figure 4A** représente le contenu du premier fichier d'historisation LG1 selon un exemple particulier. Conformément à l'invention, les données d'historisation DH enregistrées dans le premier fichier d'historisation LG1 sont conformes au premier format FT1 de données. Dans cet exemple, le premier fichier d'historisation LG1 peut comporter des données d'historisation DH sous la forme d'entrées RC distinctes (appelées aussi entrées d'historique), chacune d'elles étant représentative d'une transaction respective traitée par la carte à puce 2.

Dans l'exemple considéré ici, le premier fichier d'historisation LG1 comporte les entrées d'historique RC1-RC10 représentatives de transactions antérieurs à la transaction courante TR1, traitées par la carte à puce 2. Conformément au premier format FT1, les entrées RC1 à RC10 comprennent chacune les types de données DH1 à DH6, comme déjà décrit ci-avant. On suppose ici que le premier fichier d'historisation LG1 peut contenir un nombre maximum n1 de 10 entrées RC de données d'historisation correspondant à 10 transactions respectives, bien que des variantes soient bien entendu possibles.

Selon un exemple particulier, le premier fichier d'historisation LG1 est conforme à la norme ISO/IEC 7816-4 (cf. « EMV 4.3 Book 3 », section 4). L'entrée RC1 est l'entrée la plus récente, l'entrée RC2 est la deuxième transaction la plus récente, etc.

La **figure 4B** représente le contenu du deuxième fichier d'historisation LG2 selon un exemple particulier. Conformément à l'invention, les données d'historisation DH sauvegardées dans le deuxième fichier d'historisation LG2 sont conformes au deuxième format FT2 de données. Dans cet exemple, le deuxième fichier d'historisation LG2 peut comporter des données d'historisation DH sous la forme d'entrées RD distinctes - notées ici RD1-RD20 -, chacune d'elles étant représentative d'une transaction respective traitée par la carte à puce 2. Chaque entrée RD (appelée aussi entrée de sauvegarde) présente dans le fichier LG2 correspond ici à une ancienne entrée RC qui a été précédemment transférée par mesure de sauvegarde depuis le premier fichier d'historisation LG1, conformément à l'invention. On suppose ici que le deuxième fichier d'historisation LG2 peut contenir un nombre maximum n2 de 20 entrées RD de données d'historisation correspondant à 20 transactions respectives, bien que des variantes soient bien entendu possibles.

Conformément au deuxième format FT2, chaque entrée RD sauvegardée dans le deuxième fichier d'historisation LG2 comprend une sélection (ou sous-ensemble) parmi les types de données DH1 à DH6 de sorte que l'un au moins parmi les types DH1 à DH6 est exclu. A titre d'exemple, les entrées RD1 et RD2 comportent des données d'historisation DH de type DH1, DH2 et DH6, tandis que l'entrée RD3 comporte uniquement des données d'historisation DH de type DH2 et DH6 **(****figure 4B****).**

Les données d'historisation DH dans le deuxième format FT2 constituent donc une version compressée ou allégée par rapport aux données d'historisation DH dans le premier format FT1. Dans cet exemple, la compression réalisée pour passer du format FT1 au format FT2 implique une perte de données, c'est-à-dire l'exclusion d'au moins un type de données lors de la sauvegarde dans le deuxième fichier d'historisation LG2. D'autres types de compression sont toutefois possibles.

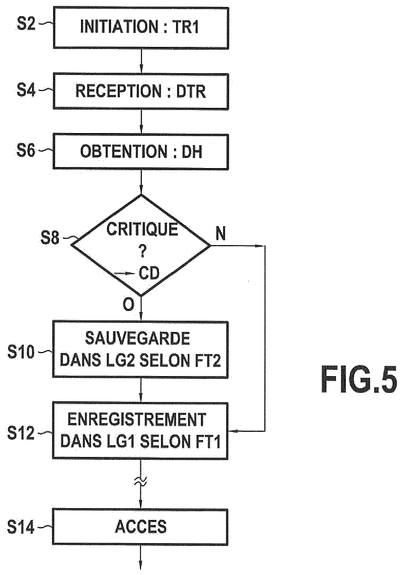

La **figure 5** représentent les étapes réalisées par la carte à puce 2 illustrée en **figures 1-3** et **4A-4B** lors d'un procédé de traitement conforme à un mode de réalisation particulier de l'invention. Plus précisément, la carte à puce 2 met en œuvre le procédé de traitement en exécutant le programme PG1, selon un mode de réalisation particulier de l'invention.

On suppose que le traitement d'une transaction TR1, dite transaction courante, est initié (S2) par la carte à puce 2 en coopération avec le terminal T. Comme déjà indiqué, on suppose ici que cette transaction est de type EMV (une transaction de paiement par exemple).

Au cours du traitement de cette transaction TR1, la carte à puce 2 reçoit (S4) diverses données de transaction DTR représentatives de la transaction courante TR1, conformément au protocole EMV (date, monnaie, montant de la transaction...).

Au cours d'une étape S6 d'obtention, la carte à puce 2 obtient, à partir des données de transaction DTR reçues, de nouvelles données d'historisation (ou données d'historique) DH à enregistrer en tant que nouvelle entrée dans sa mémoire 10, ces nouvelles données d'historisation DH étant représentatives de la transaction courante TR1. Comme déjà expliqué, ces nouvelles données d'historisation peuvent comprendre tout ou parties des données de transaction DTR reçues en S4 et éventuellement des données supplémentaires déterminées par la carte à puce 2 en réalisant un quelconque traitement approprié à partir des données de transaction TR1. Dans un exemple particulier, les données de transaction DTR reçues en S4 et les nouvelles données d'historisation DH obtenues en S6 sont identiques.

On suppose ici que la carte à puce 2 obtient en S6 tous les types de données DH1 à DH6 tels que décrits précédemment en référence notamment à la **figure 2A****.** Ces nouvelles données d'historisation DH comprennent notamment le type des contrôles sécuritaires réalisés par la carte à puce 2 lors du traitement de la transaction courante TR1 ou encore le statut (accepté, refusé) de cette transaction TR1.

Comme indiqué par la suite, la carte à puce 2 est sur le point d'enregistrer (étape S12 à venir) les nouvelles données d'historisation DH obtenues en S6 dans le premier fichier d'historisation LG1 selon le premier format FT1 de données. Cet enregistrement S12 imminent peut cependant être critique s'il cause la perte d'anciennes de données d'historisation DH déjà présentes dans le premier fichier d'historisation LG1 au moment de l'enregistrement S12. Aussi, préalablement à l'étape S12 d'enregistrement dans le premier fichier d'historisation LG1, la carte à puce réalise l'étape S8 de vérification, et éventuellement aussi l'étape S10 de transfert, comme décrit ci-après.

Au cours de l'étape S8 de vérification, la carte à puce 2 vérifie que l'enregistrement S12 à venir des nouvelles données d'historisation DH dans le premier fichier d'historisation LG1 selon le premier format FT1 remplit au moins une condition prédéterminée CD indiquant que ledit enregistrement S12 est critique vis-à-vis d'anciennes données d'historisation DH stockées en tant que précédente entrée RC (représentative d'une transaction antérieure à la transaction courante TR1) dans le premier fichier d'historisation LG1. Comme indiqué par la suite, l'homme du métier peut adapter la ou les conditions CD à prendre en compte en S8 pour déterminer si l'enregistrement S8 à réaliser est critique ou non. Selon un exemple particulier, l'enregistrement S8 des nouvelles données d'historisation DH est jugé critique si cet enregistrement dans le premier fichier d'historisation LG1 cause la suppression (ou perte) d'une quelconque ancienne entrée RC déjà présente dans ce fichier LG1 avant l'enregistrement S12.

La définition des conditions CD permet d'adapter dans quels cas d'anciennes données d'historisation DH doivent être sauvegardées selon le deuxième format FT2 de données dans le deuxième fichier d'historisation LG2. L'enregistrement S12 à venir est en particulier considéré comme étant critique s'il y a un risque suffisant qu'il cause la perte immédiate, ou éventuelle prochaine, d'anciennes données d'historisation DH pertinentes stockées dans le premier fichier d'historisation LG1 selon le premier format FT1 de données.

Une condition CD appliquée en S8 peut notamment comprendre une condition temporelle comme décrit ultérieurement.

Si l'enregistrement S12 à venir n'est pas détecté comme étant critique en S8, la carte à puce 2 procède à cette étape S12 d'enregistrement qui est décrite ultérieurement. Dans ce cas, la carte à puce 2 ne transfert pas d'anciennes données d'historisation DH depuis le premier fichier d'historisation LG1 dans le deuxième fichier d'historisation LG2. Autrement dit, le mécanisme de sauvegarde de l'invention n'est alors pas activé par la carte à puce 2.

Si, en revanche, l'enregistrement S12 à venir est détecté en S8 comme étant critique vis-à-vis d'anciennes données d'historisation DH stockées en tant que précédente entrée RC dans le premier fichier d'historisation LG1, la carte à puce 2 réalise une étape S10 de transfert au cours de laquelle elle transfert (ou sauvegarde) lesdites anciennes données d'historisation DH dans le deuxième fichier d'historisation LG2 selon le deuxième format FT2 de données. Ces anciennes données d'historisation DH sont enregistrées en tant que nouvelle entrée de sauvegarde RD dans un emplacement libre du deuxième fichier d'historisation LG2 ou, à défaut, à la place de la plus ancienne entrée de sauvegarde RD présente dans le deuxième fichier d'historisation LG2 (enregistrement cyclique). Comme déjà indiqué, le deuxième format FT2 est réduit en taille (compressé) par rapport au premier format FT1 de données. Ce transfert S10 est réalisé préalablement à l'enregistrement S12 des nouvelles données d'historisation DH dans le premier fichier d'historisation LG1 afin d'éviter tout risque de perdre d'anciennes données d'historisation DH pertinentes.

Comme décrit plus en détail par la suite, l'étape S10 de transfert (ou étape de sauvegarde) nécessite la conversion préalable des données d'historisation DH dans le deuxième format FT2 de sorte que l'un au moins des types de données définis par le premier format FT1 soit exclu des données d'historisation DH sauvegardées dans le deuxième fichier d'historisation FT2. La conversion dans le format FT2 est ici réalisée en exécutant au moins une règle de sélection prédéfinie RL, cette règle indiquant le ou les types de données sélectionnés en vue d'être sauvegardés dans le deuxième fichier d'historisation LG2.

Comme illustré en **figure 4B****,** on suppose par exemple ici que, lors de à l'étape S10 de transfert, d'anciennes données d'historisation DH du fichier LG1 sont sauvegardées selon le deuxième format FT2 en tant que nouvelle entrée RD2 dans le deuxième fichier d'historisation LG2, cette nouvelle entrée RD2 comprenant les types de données DH1, DH2 et DH6. Autrement dit, le transfert S10 conduit dans cet exemple à l'exclusion des types de données DH3, DH4 et DH5 des anciennes données d'historisation DH sauvegardées (S10) avant l'enregistrement S12 des nouvelles données d'historisation dans le premier fichier d'historisation LG1.

Comme représenté en **figure 5****,** au cours de l'étape S12 d'enregistrement, la carte à puce 2 enregistre ensuite les nouvelles données d'historisation DH (obtenues en S6) selon le premier format FT1 de données dans le premier fichier d'historisation LG1. Ces nouvelles données d'historisation DH sont enregistrées en tant que nouvelle entrée RC dans un emplacement libre du premier fichier d'historisation LG1 ou, à défaut, à la place de la plus ancienne entrée RC présente dans le premier fichier d'historisation LG1 (enregistrement cyclique). Dans le cas où l'enregistrement S12 a été détecté comme étant critique en S8, il est susceptible de causer la perte immédiate ou ultérieure d'une précédente entrée RC correspondant à une transaction antérieure à la transaction courante TR1.

La présente invention permet d'optimiser l'usage de la mémoire de la carte à puce pour stocker des données d'historique propres aux transactions traitées par la carte. Comme déjà indiqué, les ressources en mémoire d'une carte à puce sont limitées. La carte à puce selon l'invention est capable de réaliser un tri intelligent pour transférer si besoin certaines données d'historique depuis un premier fichier d'historisation vers un deuxième fichier d'historisation, de sorte à réaliser une sauvegarde sous forme compressée de données d'historisation.

Ce mécanisme de transfert permet de limiter les risques que d'anciennes données d'historique, considérées comme toujours pertinentes, soient perdues suite à l'enregistrement de nouvelles données d'historique dans la mémoire de la carte à puce et ce, tout en garantissant qu'un minimum d'informations utiles soient sauvegardé afin d'économiser de l'espace mémoire.

La sauvegarde peut être mise en œuvre dans un second fichier d'historique dédié de la carte à puce sans qu'il soit nécessaire d'exécuter un algorithme de compression complexe, facilitant ainsi la sécurisation des données d'historisation.

En particulier, l'invention permet de déterminer si d'anciennes données d'historisation doivent être transférées depuis le premier fichier d'historisation vers un deuxième fichier d'historisation, en fonction du caractère critique ou non d'un enregistrement à venir de nouvelles données d'historisation dans le premier fichier d'historisation. Si un tel enregistrement à venir est critique, la carte à puce détecte que d'anciennes données d'historisation stockées dans le premier fichier d'historisation risque d'être perdues et transfert par conséquent celles-ci dans le deuxième fichier d'historisation dans un format compressé. Bien que certaines données d'historisation ne soient pas conservées lors de ce transfert de sauvegarde en raison de l'usage du second format, cela permet de garantir que la carte à puce garde en mémoire au moins certains types de données jugés importants pour une exploitation ultérieure par la carte à puce ou une entité tierce.

La carte à puce 2 peut ainsi accéder ultérieurement aux données d'historisation DH enregistrées aussi bien dans le premier fichier d'historisation LG1 dans le format FT1 que dans le deuxième fichier d'historisation LG2 dans le format FT2.

En particulier, au cours d'une étape S14 de lecture **(****figure 5****),** la carte à puce 2 peut ultérieurement lire les données d'historisation DH stockées dans le deuxième fichier d'historisation LG2 selon le format FT2 et utiliser ces données de façon appropriée. La carte à puce 2 peut notamment utiliser ces données DH pour réaliser un contrôle sécuritaire, notamment lors du traitement d'une transaction ultérieure à la transaction TR1, ou peut encore transmettre ces données à un terminal externe, par exemple lors du traitement d'une transaction d'ultérieure.

La carte à puce 2 peut ainsi avantageusement utiliser toutes les données d'historisation DH sauvegardées dans le deuxième fichier d'historisation pour sécuriser le traitement de transactions. L'émetteur IS de la carte à puce 2 peut également recevoir ces données, lors du traitement en ligne d'une transaction par exemple, pour réaliser tous types de traitement appropriés : contrôles sécuritaires à distance de la transaction en cours, analyse comportemental du porteur de la carte...

Comme déjà indiqué, les conditions prédéfinies CD appliquées à l'étape S8 pour déterminer si l'enregistrement S12 à venir est critique ou non peuvent être adaptées selon le cas.

Dans un exemple de réalisation particulier, la carte à puce 2 détecte systématiquement en S8 que l'enregistrement S12 à venir des nouvelles données d'historisation DH de la transaction courante TR1 n'est pas critique si cette transaction courante TR1 est une transaction sans contact. Autrement dit, la carte à puce 2 bloque systématiquement le mécanisme de sauvegarde de l'invention dans le cas où la transaction courante TR1 est traitée en sans contact par la carte à puce 2. Pour ce faire, la carte à puce 2 détecte au préalable si la transaction courante TR1 est une transaction sans contact ou non. Lorsqu'une transaction est réalisée en sans contact, il est important que la carte à puce 2 traite la transaction rapidement, en raison notamment des contraintes de temps imposées par cette opération ou par une norme applicable. Il est donc avantageux d'éviter de mettre en œuvre le mécanisme de sauvegarde de l'invention afin de garantir un traitement rapide des transactions sans contact.

Dans un exemple de réalisation particulier, la carte à puce 2 détecte en S8 que l'enregistrement S12 à venir des nouvelles données d'historisation DH de la transaction courante TR1 est critique seulement si la transaction courante TR1 est passé avec succès. Pour ce faire, la carte à puce 2 détecte au préalable si un cryptogramme TC (pour *« Transaction Certificate* »), indiquant que la transaction a été approuvée, a été obtenu pour la transaction courante TR1. La carte à puce 2 consulte par exemple les données d'historisation DH obtenues en S6 et détermine si celles-ci contiennent le cryptogramme TC conforme à la norme EMV. Cette variante permet de limiter l'espace mémoire utilisé dans la carte à puce en ne transférant dans le fichier d'historisation secondaire que les données d'historisation considérées comme étant les plus pertinentes, à savoir celles concernant des transactions approuvées par la carte à puce 2.

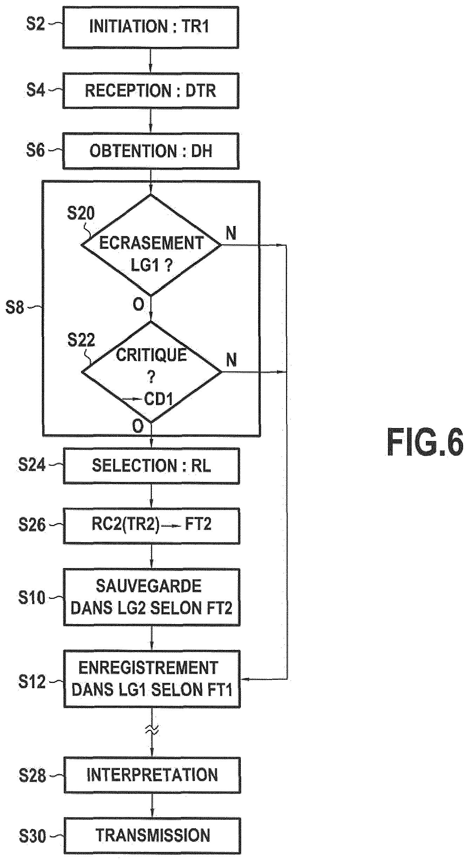

La **figure 6** représentent les étapes réalisées par la carte à puce 2 illustrées en **figures 1-3** et **4A-4B** lors d'un procédé de traitement conforme à un mode de réalisation particulier de l'invention. Plus précisément, la carte à puce 2 met en œuvre le procédé de traitement en exécutant le programme PG1, selon un mode de réalisation particulier de l'invention.

On suppose que la carte à puce 2 réalise les étapes S2, S4 et S6 de façon identique à ce qui est décrit précédemment en référence à la **figure 5****,** et que la carte à puce 2 est sur le point de d'enregistrer (étape S12 à venir) les nouvelles données d'historisation DH obtenues en S6 dans le premier fichier d'historisation LG1 selon le premier format FT1 de données, comme déjà décrit en référence à **la** **figure 5****.**

La carte à puce 2 réalise ensuite l'étape S8 de vérification, comme déjà décrit en référence à la **figure 5****,** pour vérifier si l'enregistrement S12 à venir des nouvelles données d'historisation DH dans le premier fichier d'historisation LG1 est critique vis-à-vis d'anciennes données d'historisation DH stockées en tant que précédente entrée RC dans le premier fichier d'historisation LG1.

Pour ce faire, au cours de l'étape S8 de vérification, la carte à puce 2 réalise dans cet exemple une étape S20 de détermination pour déterminer si l'enregistrement S12 à venir des données d'historisation DH selon le premier format FT1 de données dans le premier fichier d'historisation LG1 conduit (une fois réalisé) à un écrasement ou suppression d'une précédente entrée RC, représentative d'une précédente transaction, déjà enregistrée dans le premier fichier d'historisation LG1 selon le premier format FT1 de données. Un risque d'écrasement est par exemple détecté s'il n'existe plus d'emplacement ou de zone mémoire libre (non occupée) dans le premier fichier d'historisation LG1 ou encore si ce fichier LG1 comporte déjà un nombre maximal prédéfini n1 d'entrées correspondant à des transactions antérieures à la transaction courante TR1.

Si l'étape S20 de détermination délivre un résultat négatif (pas de risque d'écrasement d'une ancienne entrée dans LG1), alors la carte à puce 2 procède à l'étape S12 d'enregistrement, de façon identique à ce qui est décrit précédemment à la **figure 5****,** de sorte à enregistrer les nouvelles données d'historisation DH obtenues en S6 dans le premier fichier d'historisation LG1 selon le premier format FT1 de données. Dans ce cas, la carte à puce 2 ne transfert pas d'anciennes données d'historisation DH depuis le premier fichier d'historisation LG1 dans le deuxième fichier d'historisation LG2. Autrement dit, le mécanisme de sauvegarde de l'invention n'est pas activé par la carte à puce 2.

Si, en revanche, l'étape S20 de détermination délivre un résultat positif indiquant un risque d'écrasement d'une précédente entrée RC dans le premier fichier d'historisation LG1, alors la carte à puce 2 poursuit l'étape de vérification S8 en réalisant une détection S22.

A titre d'exemple, on suppose par la suite que, lors de l'étape S20 de détermination, la carte à puce 2 détermine que l'enregistrement S12 à venir des données d'historisation DH selon le premier format FT1 de données dans le premier fichier d'historisation LG1 conduit à l'écrasement de la précédente entrée RC2, représentative d'une précédente transaction TR2, déjà enregistrée dans le premier fichier d'historisation LG1 selon le premier format FT1 de données **(****figure 4A****).** Ceci s'explique ici par le fait que la précédente entrée RC2 constitue dans cet exemple la plus ancienne entrée enregistrée dans le fichier LG1 au moment de l'exécution de l'étape S20 de détermination.

Au cours de l'étape S22 de détection, la carte à puce 2 détecte que l'enregistrement S8 à venir des données d'historisation DH de la transaction courante TR1 est critique si la précédente transaction TR2, définie par ladite précédente entrée DH2 risquant d'être écrasée, remplit une première condition temporelle CD1.

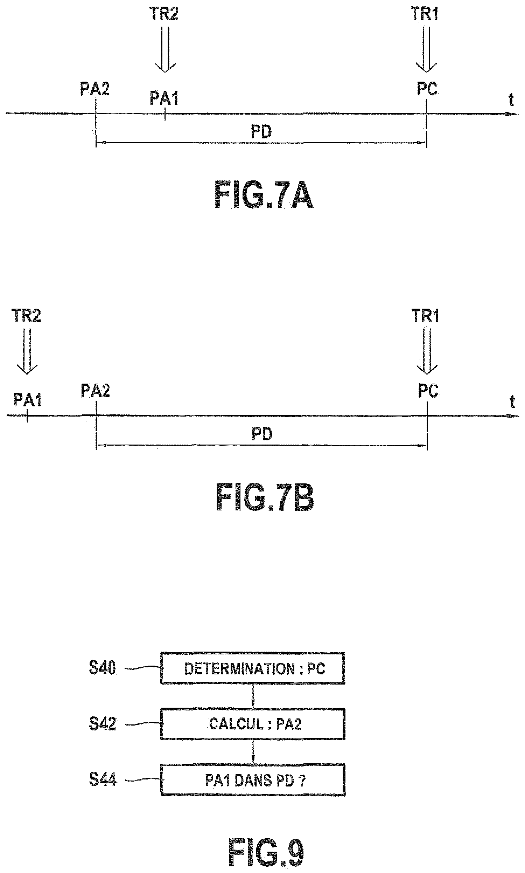

Diverses conditions temporelles sont possibles pour définir en S22 si un enregistrement par écrasement dans le premier fichier d'historisation LG1 constitue un enregistrement critique ou non au sens de l'invention. Une combinaison de conditions temporelles et non-temporelles est également possible. Dans l'exemple considéré ici, la vérification de la première condition temporelle est illustrée en référence aux **figures 7A et 7B****.**

On suppose que la transaction courante TR1 est traitée (ou a été traitée) au cours d'un instant courant PC qui est représenté sur une ligne de temps dans les **figures 7A** et **7B****.**

Le terme « instant » désigne dans ce document une date et/ou une heure ou, plus généralement, une quelconque indication d'une position dans le temps (indication temporelle). On suppose que chaque transaction considérée dans ce document est caractérisée par un instant t donné qui est défini dans les données d'historique correspondantes. Dans ce document, un instant peut être caractérisé par une date et/ou une heure par exemple.

L'instant courant PC caractérise l'instant au cours duquel est réalisé le procédé de l'invention, la manière dont cet instant courant est déterminé par le terminal T étant laissé au libre choix de l'homme du métier. Dans un exemple particulier, la carte à puce 2 récupère une indication de l'instant courant PC depuis le terminal T ('étape S4) dans les données de transaction DTR.

Selon l'exemple considéré ici, PC désigne donc l'instant courant au cours duquel est réalisé ou a été réalisé la transaction courante TR1 par la carte à puce 2. On note par ailleurs PA1 un premier instant, antérieur dans le temps à l'instant courant PC, au cours duquel a été réalisée la précédente transaction TR2 comme définie par la précédente entrée RC2. La première condition temporelle CD1 est détectée en S22 comme étant remplie si ce premier instant antérieur PA1, au cours duquel a été réalisée la précédente transaction TR2 selon la précédente entrée RC2, se trouve dans une période de temps PD, d'une durée prédéfinie, terminant à l'instant courant PC. Cette période de temps PD est ici une période de temps glissante qui présente une durée prédéfinie et s'achève à l'instant courant PC de la transaction courante TR1 traitée par la carte à puce 2. La durée prédéfinie de la période PD est par exemple fixée à 1 mois, cette valeur pouvant être adaptée selon le cas.

La **figure 7A** représente un premier cas où, selon l'entrée RC2 stockée dans le fichier d'historisation LG1, la précédente transaction TR2 est associée à un instant antérieur PA1 se trouvant dans la période de temps PD. Dans ce cas, la première condition temporelle CD1 est donc remplie.

La **figure 7B** représente un deuxième cas où, selon l'entrée RC2 stockée dans le fichier d'historisation LG1, la précédente transaction TR2 est associée à un instant antérieur PA1 qui est antérieur à la période de temps PD. Dans ce cas, la première condition temporelle CD1 n'est donc pas remplie.

La vérification réalisée par la carte à puce 2 pour déterminer en S22 si la première condition temporelle CD1 est remplie est décrite plus en détail ci-après dans un exemple particulier représenté en **figure 9****.**

Toujours en référence à la **figure 6****,** si la première condition temporelle CD1 est détectée en S22 comme n'étant pas remplie (cas de la **figure 7B****),** alors la carte à puce 2 procède à l'étape S12 d'enregistrement, de façon identique à ce qui est décrit précédemment à la **figure 5****,** de sorte à enregistrer les nouvelles données d'historisation DH obtenues en S6 dans le premier fichier d'historisation LG1 selon le premier format FT1 de données. Dans ce cas, la carte à puce 2 ne transfert pas d'anciennes données d'historisation DH depuis le premier fichier d'historisation LG1 dans le deuxième fichier d'historisation LG2. Autrement dit, le mécanisme de sauvegarde de l'invention n'est pas activé par la carte à puce 2. Dans ce cas particulier, l'enregistrement S12 des nouvelles données d'historisation DH représentatives de la transaction courante TR1 entraîne par conséquent la suppression, dans le premier fichier d'historisation LG1, de l'entrée RC2 correspondant à la précédente transaction TR2.

Cet écrasement de données en S12 se justifie ici par le fait que l'on estime que la précédente entrée RC2 n'est plus pertinente du fait qu'elle correspond à une transaction suffisamment ancienne car antérieure à la fenêtre temporelle PD terminant au point courant PC. La carte à puce 2 juge donc ici qu'il n'est pas utile de sauvegarder une version compressée de cette précédente entrée RC2 dans le deuxième fichier d'historisation LG2, ce qui permet d'éviter l'utilisation superflue de ressources de la carte à puce 2.

Si, au contraire, la première condition temporelle CD1 est détectée en S22 comme étant remplie (cas de la **figure 7A****),** alors l'enregistrement S12 à venir est détecté comme critique (S8) et la carte à puce 2 réalise une sauvegarde de l'entrée RC2 dans le deuxième fichier d'historisation LG2 conformément à l'invention **(****figure 6****).**

On suppose dans cet exemple que la carte à puce 2 réalise la sauvegarde de l'ancienne entrée RC2 représentative de l'ancienne transaction TR2, en transférant les données d'historisation DH correspondantes dans le deuxième fichier d'historisation LG2 selon le deuxième format FT2 de données. Pour ce faire, la carte à puce 2 procède dans cet exemple aux étapes S24, S26 et S10, comme décrit ci-après, préalablement à l'étape S12 d'enregistrement.

Plus particulièrement, au cours d'une étape S24 de sélection, la carte à puce 2 sélectionne parmi les types de données d'historisation DH1-DH6 définis par le premier format FT1 de données, un sous-ensemble de de types de données d'historisation conformément à au moins une règle de sélection RL prédéfinie. La carte à puce 2 peut sélectionner par exemple en S24 les types de données DH1, DH2 et DH6 parmi les types de données DH1-DH6, comme illustré en **figures 2A-2B****.** Ces types de données sont par exemple tels que :
- DH1 définit un instant (date et/ou heure) caractérisant la transaction courante TR1 ;
- DH2 définit le montant de la transaction courante TR1 ; et
- DH3 définit la monnaie utilisée dans la transaction courante TR1.

A noter que les règles prédéfinies RL appliquées à l'étape S24 pour déterminer quels types de données doivent être sélectionnés peuvent être adaptées selon le cas.

Selon un exemple particulier, les règles prédéfinies RL définissent toujours les mêmes types de données à sauvegarder en tant que nouvelle entrée dans le deuxième fichier d'historisation LG2. Les règles RL prévoient par exemple la sélection systématique des types de données DH1, DH2 et DH6 lors de l'étape S24 de sélection, causant ainsi l'exclusion des types de données DH3-DH5.

Selon un autre exemple, la carte à puce 2 peut également adapter les types de données d'historisation DH sélectionnés en S24 en fonction des précédentes entrées de sauvegarde RD déjà stockées dans le deuxième fichier d'historisation LG2 au moment d'initier l'étape S24 de sélection. En faisant varier les types de données sélectionnés en S24, il est possible de limiter encore d'avantage l'espace mémoire nécessaire pour stocker les données d'historisation DH.

Plus particulièrement, au moment d'initier l'étape S24 de sélection, le second fichier d'historisation LG2 comprend par exemple déjà au moins une ancienne entrée RD sauvegardée selon le format FT. Cette ancienne entrée RD est représentative d'une précédente transaction antérieure à la transaction TR2 faisant l'objet du mécanisme de sauvegarde. On suppose ici par exemple que le deuxième fichier d'historisation LG2 ne comporte, au moment d'initier l'étape S24 de sélection, que les anciennes entrées sauvegardées RD1 et RD2 correspondant à des transactions respectives TR3 et TR4 antérieures à la transaction TR2 **(****figure 4B****).** Dans ce cas, la carte à puce 2 sélectionne en S24, conformément à une règle de sélection RL prédéfinie, le premier type DH1 de données d'historisation seulement si la plus récente entrée RD sauvegardée dans le second fichier d'historisation LG2 comportant ledit premier type DH1 de donnée d'historisation spécifie, pour ledit premier type DH1 de données d'historisation, une valeur différente de celle définie par l'entrée RC2 pour la transaction TR2. Autrement dit, en supposant par exemple que DH1 correspond à l'instant (la date par exemple) d'une transaction, la carte à puce 2 ne sélectionne le type DH1 en S24 que si la précédente entrée RD2 comportant le premier type DH1 dans le fichier LG2 spécifie, pour ce type DH1, une date différente de celle définie par l'entrée RC2 dans le fichier LG1 pour la transaction TR2. Dans l'hypothèse où l'entrée RD2 ne comporterait pas le type DH1, la carte à puce 2 se réfère à la précédente entrée de sauvegarde RD1 qui comporte le type DH1 de sorte que le type DH1 est sélectionné en S24 que si la précédente entrée RD1 dans le fichier LG2 spécifie, pour ce type DH1, une date différente de celle définie par l'entrée RC2 dans le fichier LG1 pour la transaction TR2.

De cette manière, il est possible par exemple d'adapter le contenu de chaque nouvelle entrée RD sauvegardée dans le deuxième format FT2, de sorte que l'une au moins des conditions suivantes soient satisfaites :
- le montant de la transaction TR2 à sauvegarder dans LG2 est toujours sélectionné en S24 ;
- la date de la transaction TR2 à sauvegarder est sélectionnée en S24 seulement si elle est différente de la date de la transaction la plus récente déjà sauvegardée dans le deuxième fichier d'historisation LG2 ;
- la monnaie de la transaction TR2 à sauvegarder est sélectionnée en S24 seulement si elle est différente de la monnaie de la transaction la plus récente déjà sauvegardée dans le deuxième fichier d'historisation LG2.

Autrement dit, au moins une entrée RD sauvegardée dans le deuxième fichier d'historisation LG2 peut être codée à partir du contenu de l'entrée RD immédiatement précédente dans le deuxième fichier d'historisation LG2 ou à partir du contenu d'une autre précédente entrée RD dans le deuxième fichier d'historisation LG2.

Si la carte à puce enregistre un type de types de donnée dans le deuxième fichier d'historisation LG2 lors de la sauvegarde d'une ancienne transaction, uniquement lorsque la valeur correspondante diffère par rapport à une autre transaction précédemment sauvegardée dans le deuxième fichier d'historisation LG2, il est possible de gagner encore plus d'espace mémoire sans perdre d'informations utiles. Comme plusieurs transactions successives présentent souvent des caractéristiques communes (même date, même monnaie...), on évite de stocker des informations redondantes dans le fichier d'historisation secondaire LG2 de la carte à puce 2. Une entrée de sauvegarde RD stockée dans le second fichier d'historisation LG2 peut s'interpréter à partir de l'entrée immédiatement précédente, ou à partir d'une autre entrée précédente, dans ce fichier LG2.

En particulier lorsque les types des données d'historisation dans le deuxième fichier d'historisation LG2 sont susceptibles de varier, il est avantageux d'inclure dans chaque entrée RD un champ (non représenté sur les figures) indiquant les types de données inclus (par exemple dans un entête de l'entrée). Ce champ permet notamment d'interpréter plus facilement les données d'historisation incluses dans une entrée RD, lors par exemple d'une étape d'interprétation S28 décrite ci-après.

Dans la suite de cet exemple représenté en **figure 6****,** on suppose que seuls les types de DH2 et DH6 sont sélectionnés lors de l'étape S24 de sélection dans le cadre de la sauvegarde de l'entrée RC2 du fichier LG1 correspondant à l'ancienne transaction TR2.

Une fois l'étape S24 de sélection réalisée, la carte à puce 2 convertit (étape S26) les données d'historisation DH de l'entrée RC2 depuis le premier format FT1 dans le deuxième format FT2 de sorte à former une nouvelle entrée de sauvegarde RD3 dans laquelle seuls le ou les types de données d'historisation sélectionnés en S24 sont conservés. Autrement dit, dans l'exemple considéré ici, la nouvelle entrée de sauvegarde RD3 comprend les données DH2 et DH6 de l'ancienne entrée RC2. En revanche, les données DH1, DH3, DH4 et DH5 de l'ancienne entrée RC2 sont exclues de la sauvegarde.

Au cours d'une étape S10 de transfert, la carte à puce 2 transfert (ou sauvegarde) la nouvelle entrée de sauvegarde RD3 dans le deuxième fichier d'historisation LG2 selon le deuxième format FT2 de données, comme déjà décrit en référence à la **figure 5****.** Plus particulièrement, dans l'exemple considéré ici, la nouvelle entrée RD3 est enregistrée dans le deuxième fichier d'historisation LG2 à la suite de la précédente entrée RD2.

Suite à cette étape S10 de transfert, la carte à puce 2 réalise l'étape S12 d'enregistrement au cours de laquelle elle enregistre les nouvelles données d'historisation DH, correspondant à la transaction en cours TR1, dans le premier fichier d'historisation LG1 selon le premier format FT1. Dans le cas où l'enregistrement S12 a été détecté à l'avance en S8 comme étant critique, il peut causer la perte immédiate ou ultérieure d'une précédente entrée RC correspondant à une transaction antérieure à la transaction courante TR1, telle que par exemple l'entrée RC2 de la précédente transaction TR2.

La carte à puce 2 peut ultérieurement consulter les données d'historisation DH enregistrées dans le format FT2 dans le deuxième fichier d'historisation LG2.

Comme représenté en **figure 6****,** la carte à puce 2 peut ultérieurement (étape S28) interpréter si besoin l'entrée de sauvegarde RD2 stocker dans le deuxième fichier d'historisation LG2 à partir de l'entrée de sauvegarde RD immédiatement précédente, ou à partir d'une autre entrée de sauvegarde RD précédente. La carte à puce 2 peut le cas échéant se reporter au champ de l'entrée RD2 pour déterminer les types de données inclus dans cette entrée. Dans l'exemple considéré ici **(****figure 4B****),** la carte à puce 2 convertit l'entrée de sauvegarde RD3 dans un format modifié, plus facilement exploitable par une entité tierce, en y incluant la données d'historisation DH1 représentative de l'ancienne transaction TR2. La carte à puce 2 retrouve la donnée DH1 de la transaction TR2 à partir de la donnée DH1 de la précédente entrée RD2 dans le deuxième fichier d'historisation LG2.

La carte à puce 2 peut ensuite transmettre (S30) l'entrée RD3 dans ce format modifié (ou dans son format FT2 d'origine) à une entité tierce tel que la banque IS par l'intermédiaire d'un terminal de lecture, ce qui permet à l'émetteur IS de la carte à puce 2 de récolter les informations d'historique pertinentes. L'interprétation S28 effectuée éventuellement par la carte à puce 2 permet de rendre transparente pour l'émetteur IS la manière dont a été codée une entrée de sauvegarde RD dans le deuxième fichier d'historisation LG2 à partir d'une précédente entrée de sauvegarde RD.

Par ailleurs, comme déjà indiqué, les conditions prédéfinies CD appliquées à l'étape S8 **(****figures 4-5****)** pour déterminer si un enregistrement S2 à réaliser est critique ou non peuvent être adaptées selon le cas.

Dans un exemple de réalisation particulier, la carte à puce 2 détecte systématiquement en S22 **(****figure 6****)** que l'enregistrement des données d'historisation DH de la transaction courante TR1 n'est pas critique si la transaction courante TR1 est une transaction sans contact. Pour ce faire, la carte à puce 2 détecte au préalable si la transaction courante TR1 est une transaction sans contact ou non.

Lorsqu'une transaction est réalisée en sans contact, il est important que la carte à puce 2 traite la transaction rapidement, en raison notamment des contraintes de temps imposées par cette opération ou par une norme applicable. Il est donc avantageux d'éviter de mettre en œuvre le mécanisme de stockage sous forme compressée dans le fichier d'historisation secondaire afin de garantir un traitement rapide des transactions sans contact.

En outre, toujours dans le but de faciliter le traitement des transactions sans contact, il peut être avantageux de déclencher le mécanisme de sauvegarde de l'invention en transférant d'anciennes données d'historisation DH dans le deuxième fichier d'historisation LG2 selon le deuxième format FT2 lorsque la transaction courante TR1 est traitée par la carte à puce 2 par contact et ce, même s'il n'y a pas un risque immédiat de supprimer de précédentes données d'historisation DH dans le premier fichier d'historisation LG1 **(****figure** 1).

On peut par exemple configurer la carte à puce 2 pour qu'elle détecte en S8 **(****figures 4** et **5****)** que l'enregistrement S12 à venir des données de transaction DH de la transaction courante TR1 dans le premier fichier LG1 est critique dès lors qu'il existe un nombre insuffisant d'espaces vacants dans le premier fichier d'historisation LG1 pour que des données d'historisation de prochaines transactions en sans contact puissent y être stockées rapidement dans le premier fichier d'historisation LG1 sans nécessiter la sauvegarde S10 d'anciennes données d'historisation DH dans le deuxième fichier d'historisation LG2.

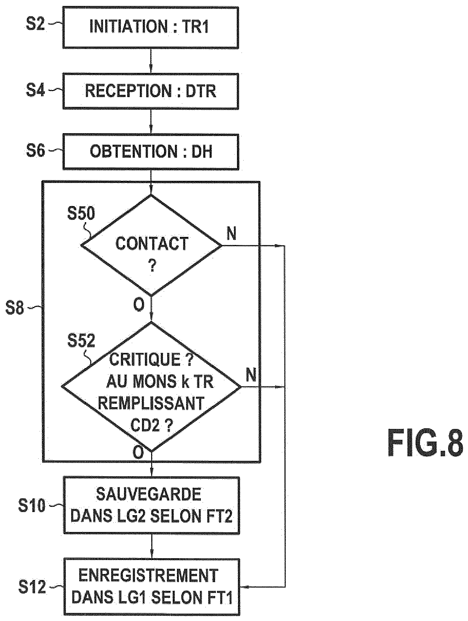

Ainsi, selon un exemple particulier représenté en **figure 8****,** la carte à puce 2 réalise les étapes S2 à S6 comme déjà décrit précédemment. Au cours de l'étape S8 de vérification, la carte à puce 2 détermine en S50 si la transaction courante TR1 est réalisée par contact. Dans la négative (réalisation sans contact), la carte à puce 2 détecte (S8) que l'enregistrement S12 à venir des nouvelles données d'historisation DH dans le premier fichier d'historisation LG1 n'est pas critique et procède par conséquent directement à l'étape S12 d'enregistrement de façon identique à ce qui est décrit précédemment en référence aux **figures 4** et **5****.**

Si, en revanche, la carte à puce 2 détermine en S50 que la transaction courante TR1 est réalisée par contact avec le terminal T, alors la carte à puce 2 procède à l'étape S52 de détermination au cours de laquelle elle détecte systématiquement que l'enregistrement S12 à venir est critique si la condition suivante est remplie :
détection que ledit enregistrement S12 des nouvelles données d'historisation DH selon le premier format FT1 dans le premier fichier d'historisation LG1 conduit ledit fichier LG1 à contenir un nombre, supérieur ou égal à une valeur seuil k prédéterminée, d'entrées RC de transactions satisfaisant une deuxième condition temporelle CD2. Si cette dernière condition CD2 est remplie, cela signifie qu'il existe un nombre trop important (≥ k) d'entrées pertinentes dans le premier fichier d'historisation LG1 et qu'il y a donc un risque qu'il ne soit plus possible pour les nouvelles données d'historisation d'une transaction ultérieure réalisée en sans contact d'être stockées dans le premier fichier d'historisation LG1 sans déclencher le mécanisme de sauvegarde (S10) tout en évitant la perte d'anciennes données d'historisation pertinentes. Autrement dit, le blocage systématique du mécanisme de sauvegarde S10 dans le cas des transactions par contact risque alors de causer la suppression d'anciennes données d'historisation pertinentes dans le premier fichier d'historisation LG1.

Dans un exemple particulier, la deuxième condition temporelle CD2 est identique à la première condition temporelle CD1 telle que précédemment décrite.

Si l'enregistrement S12 à venir est détecté comme étant critique en S52 **(****figure 8****),** la carte à puce 2 réalise l'étape S10 de transfert d'anciennes données d'historisation depuis le premier fichier LG1 dans le deuxième fichier LG2 selon le format FT2, puis réalise l'étape S12 d'enregistrement des nouvelles données d'historisation DH de la transaction courante TR1 dans le premier fichier LG1, de façon identique à ce qui est décrit précédemment en référence aux **figures 4** et **5****.** Pour ce faire, la carte à puce 2 réalise par exemple les étapes S24 et S26 comme déjà décrites en référence à la **figure 5****.**

Si, en revanche, l'enregistrement S12 à venir est détecté comme n'étant pas critique en S52 (condition temporelle CD2 par remplie), alors la carte à puce 2 procède directement à l'étape S12 d'enregistrement de façon identique à ce qui est décrit précédemment en référence aux **figures 4** et **5****.**

Par ailleurs, comme indiqué précédemment, la **figure 9** représente la vérification réalisée par la carte à puce 2 pour déterminer en S22 **(****figure 6** et **7A****-7B)** si la première condition temporelle CD1 est remplie, selon un exemple de réalisation particulier.

Au cours d'une étape S40 de détermination, la carte à puce 2 détermine, partir des données de transaction DTR reçues en S4, l'instant courant PC caractérisant la transaction courante TR1.

La carte à puce 2 calcule (S42) ensuite un deuxième instant PA2 antérieur à l'instant courant PC, ce deuxième instant PA2 correspondant au début de la période de temps PD prédéfinie. Ce calcul S42 est réalisé à partir de l'instant courant PC et de la durée prédéfinie attribuée à ladite période de temps PD prédéfinie (PA2 = PC - PD).

La carte à puce 2 détecte (S44) que le premier instant PA1 caractérisant la transaction TR2 se trouve dans la période de temps PD s'il est postérieur au deuxième instant PA2 marquant le début de la période PD.

Un homme du métier comprendra que les modes de réalisation et variantes décrits ci-avant ne constituent que des exemples non limitatifs de mise en œuvre de l'invention. En particulier, l'homme du métier pourra envisager une quelconque adaptation ou combinaison des modes de réalisation et variantes décrits ci-avant afin de répondre à un besoin bien particulier.

## Revendications

1. Procédé de traitement mis en œuvre par un dispositif électronique (2) apte à traiter des transactions, ledit procédé comprenant :
- réception de données de transaction (DN) en provenance d'un terminal (T) avec lequel le dispositif électronique coopère pour traiter une transaction (TR1) courante ;
- obtention, à partir des données de transaction reçues, de nouvelles données d'historisation représentatives de la transaction courante ; et
- enregistrement des nouvelles données d'historisation selon un premier format (FT1) de données en tant que nouvelle entrée (RC) dans un premier fichier d'historisation (LG1) ;
et **caractérisé en ce que**, préalablement audit enregistrement, le procédé comprend :
- vérification que ledit enregistrement remplit au moins une condition prédéterminée indiquant que ledit enregistrement est critique vis-à-vis d'anciennes données d'historisation stockées en tant que précédente entrée (RC) selon le premier format de données dans le premier fichier d'historisation (LG1), ledit enregistrement étant critique s'il risque de causer la perte desdites anciennes données d'historisation dans le premier fichier d'historisation ; et
- dans l'affirmative, transfert des anciennes données d'historisation dans un deuxième fichier d'historisation (LG2) pour les sauvegarder selon un deuxième format (FT2) de données, réduit en taille par rapport au premier format (FT1) de données.

2. Procédé selon la revendication 1, dans lequel le deuxième format de données est réduit en ce qu'il autorise l'enregistrement d'une quantité inférieure de données par rapport au premier format de données.

3. Procédé selon la revendication 2, dans lequel le premier format de données définit une pluralité de types de données à enregistrer tandis que le deuxième format de données définit une sélection parmi ladite pluralité de types de données excluant au moins l'un parmi ladite pluralité de types de données.

4. Procédé selon l'une quelconque des revendications 1 à 3, dans lequel ladite vérification comprend :
- détermination que l'enregistrement des nouvelles données d'historisation selon le premier format de données dans le premier fichier d'historisation conduit à un écrasement d'une précédente entrée (RC), représentative d'une précédente transaction, déjà enregistrée dans le premier fichier d'historisation (LG1) selon le premier format (FT1) de données ; et
- détection que l'enregistrement est critique si la précédente transaction, définie par la précédente entrée dans le premier fichier d'historisation (LG1), remplit une première condition temporelle (CD).

5. Procédé selon la revendication 4, dans lequel la première condition temporelle est remplie si un instant antérieur (PA1) au cours duquel a été réalisée la précédente transaction (TR2) selon ladite précédente entrée se trouve dans une période de temps (PD), d'une durée prédéfinie, terminant à un instant courant au cours duquel est réalisé ou a été réalisé la transaction courante (TR1).

6. Procédé selon la revendication 5, dans lequel ladite vérification comprend :
- détermination, à partir des données de transaction (DH) reçues, de l'instant courant (PC) caractérisant la transaction courante (TR1) ; et
- calcul d'un deuxième instant antérieur (PA2) correspondant au début de la période de temps (PD), à partir de l'instant courant (PC) et de la durée prédéfinie attribuée à ladite période de temps,
le premier instant antérieur (PA1) se trouvant dans la période de temps (PD) s'il est postérieur au deuxième instant antérieur (PA2).

7. Procédé selon l'une quelconque des revendications 1 à 6, comprenant, préalablement audit enregistrement des nouvelles données d'historisation selon le premier format de données dans le deuxième fichier d'historisation :
- sélection, parmi des types de données d'historisation (DH1-DH6) définis par le premier format (FT1) de données, d'un sous-ensemble (DH1, DH2, DH6) de types de données d'historisation conformément à au moins une règle de sélection (RL) prédéfinie ; et
- conversion des anciennes données d'historisation (DH) selon le deuxième format (FT2) de données en vue d'être transférées dans le deuxième fichier d'historisation (LG2), dans laquelle seulement le ou les types de données d'historisation sélectionnés sont conservés dans les anciennes données d'historisation lors de ladite conversion.

8. Procédé selon la revendication 7, dans lequel, préalablement à ladite sélection, le second fichier d'historisation (LG2) comprend déjà au moins une entrée (RD) sauvegardée selon le deuxième format (FT2) de données, ladite entrée sauvegardée étant représentative d'une précédente transaction antérieure à la transaction courante (TR1), et
dans lequel, lors de ladite sélection, le dispositif électronique (2) sélectionne un premier type de données d'historisation prédéfini seulement si la plus récente entrée sauvegardée dans le second fichier d'historisation comportant le premier type de donnée d'historisation spécifie, pour ledit premier type de données d'historisation, une valeur différente de celle définie par ladite précédente entrée (RC).

9. Procédé selon l'une quelconque des revendications 1 à 8, dans lequel, lors de ladite vérification, le dispositif électronique détecte systématiquement que l'enregistrement n'est pas critique si la transaction courante est une transaction sans contact.

10. Procédé selon la revendication 9, dans lequel, si la transaction courante est une transaction par contact avec le terminal, le dispositif électronique détecte systématiquement lors ladite vérification que l'enregistrement est critique si la condition suivante est remplie :
- détection que ledit enregistrement des nouvelles données d'historisation selon le premier format (FT1) de données dans le premier fichier d'historisation (LG1) conduit le premier fichier d'historisation (LG1) à contenir un nombre, supérieur ou égal à une valeur seuil prédéterminée, d'entrées de transactions satisfaisant une deuxième condition temporelle.

11. Procédé selon l'une quelconque des revendications 1 à 10, dans lequel s'il est détecté lors de ladite vérification que ledit enregistrement n'est pas critique, le dispositif électronique ne transfert pas les anciennes données d'historisation dans le deuxième fichier d'historisation (LG2) selon le deuxième format (FT2) de données préalablement audit enregistrement.

12. Procédé selon l'une quelconque des revendications 1 à 11, le dispositif électronique détecte lors de ladite vérification que ledit enregistrement est critique uniquement sur détection que la transaction courante (TR1) est passée avec succès.

13. Procédé selon l'une quelconque des revendications 1 à 12, comprenant, après ledit transfert des anciennes données d'historisation selon le deuxième format (FT2) de données dans le deuxième fichier d'historisation (LG2) :
- conversion des anciennes données d'historisation depuis le deuxième format de données dans un format modifié à partir du contenu d'une précédente entrée dans le deuxième fichier d'historisation (LG2) ; et
- transmission des anciennes données d'historisation dans le format modifié de données à un terminal.

14. Programme d'ordinateur (PG1) comportant des instructions causant l'exécution des étapes d'un procédé de traitement selon l'une quelconque des revendications 1 à 13 lorsque ledit programme est exécuté par un ordinateur.

15. Dispositif électronique apte à traiter des transactions, comprenant :
- un module de réception (MD2) configurés pour recevoir des données de transaction (DN) en provenance d'un terminal (T) avec lequel le dispositif électronique coopère pour traiter une transaction (TR1) courante ;
- un module d'obtention configuré pour obtenir, à partir des données de transaction reçues, de nouvelles données d'historisation à enregistrer en tant que nouvelle entrée (RC) dans le dispositif électronique, lesdites nouvelles données d'historisation étant représentatives de la transaction courante ; et
- un module d'enregistrement configuré pour enregistrer les nouvelles données d'historisation selon un premier format (FT1) de données dans un premier fichier d'historisation (LG1) ;
le dispositif **caractérisé en ce qu'**il comprend en outre :
- un module de vérification configuré pour vérifier, préalablement à l'enregistrement par le module d'enregistrement des nouvelles données d'historisation selon le premier format (FT1) de données dans le premier fichier d'historisation (LG1), que ledit enregistrement remplit au moins une condition prédéterminée indiquant que ledit enregistrement est critique vis-à-vis d'anciennes données d'historisation stockées en tant que précédente entrée (RC) selon le premier format de données dans le premier fichier d'historisation (LG1), ledit enregistrement étant critique s'il risque de causer la perte desdites anciennes données d'historisation dans le premier fichier d'historisation ; et
- un module de sauvegarde configuré, si l'enregistrement est détecté comme étant critique par le module de vérification, pour transférer les anciennes données d'historisation dans un deuxième fichier d'historisation (LG2) pour les sauvegarder selon un deuxième format (FT2) de données, réduit en taille par rapport au premier format (FT1) de données.

## Patentansprüche

1. Verarbeitungsverfahren, das durch eine elektronische Vorrichtung (2) implementiert wird und das dazu geeignet ist, Transaktionen zu verarbeiten, wobei das Verfahren umfasst:
- Empfangen von Transaktionsdaten (DN) von einem Endgerät (T), mit dem die elektronische Vorrichtung zum Verarbeiten einer aktuellen Transaktion (TR1) zusammenwirkt,
- Erhalten, ausgehend von den empfangenen Transaktionsdaten, neuer Verlaufsdaten, welche die aktuelle Transaktion repräsentieren, und
- Aufzeichnen der neuen Verlaufsdaten gemäß einem ersten Datenformat (FT1) als neuer Eintrag (RC) in einer ersten Verlaufsdatei (LG1),
**dadurch gekennzeichnet, dass** das Verfahren vor dem Aufzeichnen umfasst:
Prüfen, ob das Aufzeichnen mindestens eine vorbestimmte Bedingung erfüllt, die angibt, dass das Aufzeichnen gegenüber alten Verlaufsdaten kritisch ist, die als vorhergehender Eintrag (RC) gemäß dem ersten Datenformat in der ersten Verlaufsdatei (LG1) gespeichert sind, wobei das Aufzeichnen kritisch ist, wenn die Gefahr besteht, dass es zum Verlust der alten Verlaufsdaten in der ersten Verlaufsdatei führt, und
- wenn dies zutrifft, Überführen der alten Verlaufsdaten in eine zweite Verlaufsdatei (LG2), um sie gemäß einem zweiten Datenformat (FT2) zu sichern, dessen Größe im Vergleich zu dem ersten Datenformat (FT1) reduziert ist.

2. Verfahren nach Anspruch 1, wobei das zweite Datenformat dadurch reduziert ist, dass es das Aufzeichnen einer geringeren Datenmenge im Vergleich zu dem ersten Datenformat gestattet.

3. Verfahren nach Anspruch 2, wobei das erste Datenformat mehrere Typen von aufzuzeichnenden Daten definiert, während das zweite Datenformat eine Auswahl aus den mehreren Datentypen definiert, die mindestens einen von den mehreren Datentypen ausschließt.

4. Verfahren nach einem der Ansprüche 1 bis 3, wobei das Prüfen umfasst:
- Bestimmen, dass das Aufzeichnen neuer Verlaufsdaten gemäß dem ersten Datenformat in der ersten Verlaufsdatei ein Überschreiben eines vorhergehenden Eintrags (RC) zur Folge hat, der eine vorhergehende Transaktion repräsentiert, die bereits in der ersten Verlaufsdatei (LG1) gemäß dem ersten Datenformat (FT1) aufgezeichnet ist, und
- Erkennen, dass das Aufzeichnen kritisch ist, wenn die vorhergehende Transaktion, die durch den vorhergehenden Eintrag in der ersten Verlaufsdatei (LG1) definiert ist, eine erste zeitliche Bedingung (CD) erfüllt.

5. Verfahren nach Anspruch 4, wobei die erste zeitliche Bedingung erfüllt ist, wenn ein vorheriger Zeitpunkt (PA1), zu dem die vorhergehende Transaktion (TR2) gemäß dem vorhergehenden Eintrag durchgeführt wurde, in einem Zeitraum (PD) einer vordefinierten Dauer liegt, die zu einem aktuellen Zeitpunkt endet, zu dem die aktuelle Transaktion (TR1) durchgeführt wird oder durchgeführt wurde.

6. Verfahren nach Anspruch 5, wobei das Prüfen umfasst:
- Bestimmen, ausgehend von den empfangenen Transaktionsdaten (DH), des aktuellen Zeitpunkts (PC), der die aktuelle Transaktion (TR1) kennzeichnet, und
- Berechnen eines zweiten vorherigen Zeitpunkts (PA2), der dem Beginn des Zeitraums (PD) entspricht, ausgehend von dem aktuellen Zeitpunkt (PC) und der dem Zeitraum zugeordneten vordefinierten Dauer,
wobei der erste vorherige Zeitpunkt (PA1) in dem Zeitraum (PD) liegt, wenn er nach dem zweiten vorherigen Zeitpunkt (PA2) eintritt.

7. Verfahren nach einem der Ansprüche 1 bis 6, umfassend vor dem Aufzeichnen der neuen Verlaufsdaten gemäß dem ersten Datenformat in der zweiten Verlaufsdatei:
- Auswählen aus den Typen von Verlaufsdaten (DH1-DH6), die durch das erste Datenformat (FT1) definiert sind, einer Untergruppe (DH1, DH2, DH6) von Typen von Verlaufsdaten entsprechend mindestens einer vordefinierten Auswahlregel (RL), und
- Umwandeln der alten Verlaufsdaten (DH) gemäß dem zweiten Datenformat (FT2) zum Überführen in die zweite Verlaufsdatei (LG2), wobei nur der oder die ausgewählten Typen von Verlaufsdaten in den alten Verlaufsdaten bei dem Umwandeln beibehalten werden.

8. Verfahren nach Anspruch 7, wobei vor dem Auswählen die zweite Verlaufsdatei (LG2) bereits mindestens einen Eintrag (RD) umfasst, der gemäß dem zweiten Datenformat (FT2) gesichert ist, wobei der gesicherte Eintrag eine vorhergehende Transaktion vor der aktuellen Transaktion (TR1) repräsentiert, und
wobei während des Auswählens die elektronische Vorrichtung (2) einen ersten vordefinierten Typ von Verlaufsdaten nur dann auswählt, wenn der neueste Eintrag, der in der zweiten Verlaufsdatei gesichert ist, die den ersten Typ von Verlaufsdaten beinhaltet, für den ersten Typ von Verlaufsdaten einen anderen Wert als den durch den vorhergehenden Eintrag (RC) definierten angibt.

9. Verfahren nach einem der Ansprüche 1 bis 8, wobei während des Prüfens die elektronische Vorrichtung systematisch erkennt, dass das Aufzeichnen nicht kritisch ist, wenn die aktuelle Transaktion eine kontaktlose Transaktion ist.

10. Verfahren nach Anspruch 9, wobei, wenn die aktuelle Transaktion eine Transaktion durch Kontakt mit dem Endgerät ist, die elektronische Vorrichtung bei dem Prüfen systematisch erkennt, dass das Aufzeichnen kritisch ist, wenn die folgende Bedingung erfüllt ist:
- Erkennen, dass das Aufzeichnen der neuen Verlaufsdaten gemäß dem ersten Datenformat (FT1) in der ersten Verlaufsdatei (LG1) dazu führt, dass die erste Verlaufsdatei (LG1) eine Anzahl, die größer oder gleich einem vorbestimmten Schwellenwert ist, von Transaktionseinträgen enthält, die eine zweite zeitliche Bedingung erfüllen.

11. Verfahren nach einem der Ansprüche 1 bis 10, wobei, wenn bei dem Prüfen erkannt wird, dass das Aufzeichnen nicht kritisch ist, die elektronische Vorrichtung die alten Verlaufsdaten nicht in die zweite Verlaufsdatei (LG2) gemäß dem zweiten Datenformat (FT2) vor dem Aufzeichnen überführt.

12. Verfahren nach einem der Ansprüche 1 bis 11, wobei die elektronische Vorrichtung bei dem Prüfen nur dann erkennt, dass das Aufzeichnen kritisch ist, wenn erkannt wird, dass die aktuelle Transaktion (TR1) erfolgreich verlaufen ist.

13. Verfahren nach einem der Ansprüche 1 bis 12, umfassend nach dem Überführen der alten Verlaufsdaten gemäß dem zweiten Datenformat (FT2) in die zweite Verlaufsdatei (LG2):
- Umwandeln der alten Verlaufsdaten von dem zweiten Datenformat in ein modifiziertes Format ausgehend von dem Inhalt eines vorhergehenden Eintrags in der zweiten Verlaufsdatei (LG2), und
- Übertragen der alten Verlaufsdaten in dem modifizierten Datenformat an ein Endgerät.

14. Computerprogramm (PG1), umfassend Anweisungen, welche das Ausführen der Schritte eines Verarbeitungsverfahrens nach einem der Ansprüche 1 bis 13 veranlassen, wenn das Programm durch einen Computer ausgeführt wird.

15. Elektronische Vorrichtung, die dazu geeignet ist, Transaktionen zu verarbeiten, umfassend:
- ein Empfangsmodul (MD2), das dazu ausgestaltet ist, Transaktionsdaten (DN) von einem Endgerät (T) zu empfangen, mit dem die elektronische Vorrichtung zum Verarbeiten einer aktuellen Transaktion (TR1) zusammenwirkt,
- ein Erhaltungsmodul, das dazu ausgestaltet ist, ausgehend von den empfangenen Transaktionsdaten neue Verlaufsdaten zu erhalten, die als neuer Eintrag (RC) in der elektronischen Vorrichtung aufgezeichnet werden sollen, wobei die neuen Verlaufsdaten die aktuelle Transaktion repräsentieren, und
- ein Aufzeichnungsmodul, das dazu ausgestaltet ist, die neuen Verlaufsdaten gemäß einem ersten Datenformat (FT1) in einer ersten Verlaufsdatei (LG1) aufzuzeichnen,
wobei die Vorrichtung **dadurch gekennzeichnet ist, dass** sie ferner umfasst:
- ein Prüfmodul, das dazu ausgestaltet ist, vor dem Aufzeichnen der neuen Verlaufsdaten gemäß dem ersten Datenformat (FT1) in der ersten Verlaufsdatei (LG1) durch das Aufzeichnungsmodul zu prüfen, ob das Aufzeichnen mindestens eine vorbestimmte Bedingung erfüllt, die angibt, dass das Aufzeichnen gegenüber alten Verlaufsdaten kritisch ist, die als vorhergehender Eintrag (RC) gemäß dem ersten Datenformat in der ersten Verlaufsdatei (LG1) gespeichert sind, wobei das Aufzeichnen kritisch ist, wenn die Gefahr besteht, dass es zum Verlust der alten Verlaufsdaten in der ersten Verlaufsdatei führt, und
- ein Sicherungsmodul, das dazu ausgestaltet ist, wenn von dem Prüfmodul erkannt wird, dass das Aufzeichnen kritisch ist, die alten Verlaufsdaten in eine zweite Verlaufsdatei (LG2) zu überführen, um sie gemäß einem zweiten Datenformat (FT2) zu sichern, dessen Größe im Vergleich zu dem ersten Datenformat (FT1) reduziert ist.

## Claims

1. A processing method implemented by an electronic device (2) able to process transactions, said method comprising:
- receiving transaction data (DN) coming from a terminal (T) with which the electronic device cooperates to process a current transaction (TR1);
- obtaining, based on the received transaction data, new transaction log data representative of the current transaction; and
- recording the new transaction log data according to a first data format (FT1) as a new entry (RC) in a first transaction log file (LG1);
and **characterized in that**,
prior to said recording, the method comprises:
- verifying that said recording fulfills at least one predetermined condition indicating that said recording is critical with respect to old transaction log data stored as a previous entry (RC) according to the first data format in the first transaction log file (LG1), said recording being critical if it risks causing the loss of said old transaction log data in the first transaction log file; and
- if so, transferring the old transaction log data into a second transaction log file (LG2) in order to back them up according to a second data format (FT2), reduced in size compared to the first data format (FT1).

2. The method according to claim 1, wherein the second data format is reduced in that it authorizes the recording of a smaller amount of data compared to the first data format.

3. The method according to claim 2, wherein the first data format defines a plurality of types of data to be recorded while the second data format defines a selection from said plurality of types of data excluding at least one among said plurality of types of data.

4. The method according to any one of claims 1 to 3, wherein said verification comprises:
- determining that the recording of the new transaction log data according to the first data format in the first transaction log file leads to an overwriting of a previous entry (RC), representative of a previous transaction, already recorded in the first transaction log file (LG1) according to the first data format (FT1); and
- detecting that the recording is critical if the previous transaction, defined by the previous entry in the first transaction log file (LG1), fulfills a first time condition (CD).

5. The method according to claim 4, wherein the first time condition is fulfilled if an earlier instant (PA1) during which the previous transaction (TR2) according to said previous entry was carried out is in a period of time (PD), of a predefined duration, ending at a current instant during which the current transaction (TR1) is carried out or has been carried out.

6. The method according to claim 5, wherein said verification comprises:
- determining, based on the received transaction data (DH), the current instant (PC) characterizing the current transaction (TR1); and
- calculating a second earlier instant (PA2) corresponding to the start of the period of time (PD), based on the current instant (PC) and the predefined duration assigned to said period of time,
the first earlier instant (PA1) being in the period of time (PD) if it is subsequent the second earlier instant (PA2).

7. The method according to any one of claims 1 to 6, comprising, prior to said recording of the new transaction log data according to the first data format in the second transaction log file:
- selecting, among the types of transaction log data (DH1-DH6) defined by the first data format (FT1), a subset (DH1, DH2, DH6) of types of transaction log data in accordance with at least one predefined selection rule (RL); and
- converting the old transaction log data (DH) according to the second data format (FT2) with a view to being transferred into the second transaction log file (LG2), in which only the selected type(s) of transaction log data is/are kept in the old transaction log data during said conversion.

8. The method according to claim 7, wherein, prior to said selection, the second transaction log file (LG2) already comprises at least one entry (RD) backed up according to the second data format (FT2), said backed up entry being representative of a previous transaction prior to the current transaction (TR1), and
wherein, during said selection, the electronic device (2) selects a first predefined type of transaction log data only if the most recent entry backed up in the second transaction log file including the first type of transaction log data specifies, for said first type of transaction log data, a value different from the one defined by said previous entry (RC).

9. The method according to any one of claims 1 to 8, wherein, during said verification, the electronic device systematically detects that the recording is not critical if the current transaction is a contactless transaction.

10. The method according to claim 9, wherein, if the current transaction is a transaction by contact with the terminal, the electronic device systematically detects during said verification that the recording is critical if the following condition is fulfilled:
- detection that said recording of the new transaction log data according to the first data format (FT1) in the first transaction log file (LG1) leads the first transaction log file (LG1) to contain a number, greater than or equal to a predetermined threshold value, of transaction entries satisfying a second time condition.

11. The method according to any one of claims 1 to 10, wherein if it is detected during said verification that said recording is not critical, the electronic device does not transfer the old transaction log data in the second transaction log file (LG2) according to the second data format (FT2) previously to said recording.

12. The method according to any one of claims 1 to 11, the electronic device detects during said verification that said recording is critical only upon detecting that the current transaction (TR1) has passed successfully.

13. The method according to any one of claims 1 to 12, comprising, after said transfer of the old transaction log data according to the second data format (FT2) in the second transaction log file (LG2):
- converting the old transaction log data from the second data format into a format modified based on the content of a previous entry in the second transaction log file (LG2); and
- transmitting the old transaction log data in the modified data format to a terminal.

14. A computer program (PG1) including instructions causing the execution of the steps of a processing method according to any one of claims 1 to 13 when said program is executed by a computer.

15. An electronic device able to process transactions, comprising:
- a receiving module (MD2) configured to receive transaction data (DN) coming from a terminal (T) with which the electronic device cooperates to process a current transaction (TR1);
- an obtaining module configured to obtain, based on the received transaction data, new transaction log data to be recorded as a new entry (RC) in the electronic device, said new transaction log data being representative of the current transaction; and
- a recording module configured to record the new transaction log data according to a first data format (FT1) in a first transaction log file (LG1);
the device **characterized in that** it further comprises:
- a verification module configured to verify, prior to the recording by the recording module of the new transaction log data according to the first data format (FT1) in the first transaction log file (LG1), that said recording fulfills at least one predetermined condition indicating that said recording is critical with respect to old transaction log data stored as a previous entry (RC) according to the first data format in the first transaction log file (LG1), said recording being critical if it risks causing the loss of said old transaction log data in the first transaction log file; and
- a backup module configured, if the recording is detected as being critical by the verification module, to transfer the old transaction log data into a second transaction log file (LG2) in order to back them up according to a second data format (FT2), reduced in size compared to the first data format (FT1).
